# EUROPEAN PATENT APPLICATION

(11) **EP 4 693 766 A1**
(43) Date of publication of application: **11.02.2026**
(21) Application number: 24780211.9
(22) Date of filing: 25.03.2024
(51) Int. Cl.: H01R 35/04

(54) **ROTARY CONNECTOR DEVICE**

(30) Priority: 31.03.2023 JP 2023058945
(71) Applicant: FURUKAWA ELECTRIC CO., LTD., Tokyo 100-8322 (JP); FURUKAWA AUTOMOTIVE SYSTEMS INC., Shiga 522-0242 (JP)
(72) Inventor: ARAKAWA, Hayato, Inukami-gun, Shiga 522-0242 (JP)
(74) Representative: Winter, Brandl - Partnerschaft mbB
(86) International application number: PCT/JP2024/011755
(87) International publication number: WO 2024/204094

(57) **Abstract**

To provide a rotary connector device making it possible to ascertain easily the neutral position of a rotating body relative to a fixed body without using a neutral mechanism and to avoid the occurrence of excessive tightening or excessive loosening when winding a flat cable. A rotary connector device 1 is provided with a rotating body 10, a fixed body 20, and a flat cable 40 housed in a housing space 70, wherein the rotating body 10 is assembled to be rotatable around a rotation axis 7 of the rotating body 10 with respect to the fixed body 20, the rotating body 10 has a sliding surface 18 that slides against the fixed body 20, the fixed body 20 has a sliding receiving surface 28 facing the sliding surface 18 of the rotating body 10, a recess 50 having a C-shaped extension shape is formed on one of the sliding surface 18 and the sliding receiving surface 28, a protrusion 60 that can move in the recess 50 is provided on the other one of the sliding surface 18 and the sliding receiving surface 28, and a rotation range of the rotating body 10 with respect to the fixed body 20 is regulated by the extension length of the recess 50 in which the protrusion 60 can move.

## Description

### TECHNICAL FIELD

The present invention is related to a rotary connector device.

### BACKGROUND ART

A conventionally known rotary connector device is configured to electrically connect a signal from a vehicle side or a power source to a steering wheel. For example, the rotary connector device is composed of a fixed member fixed to a steering column and a rotary member rotatable to follow rotation of a steering wheel that are assembled together such that they are rotatable relative to each other, and includes therein an annular accommodating space in which a flat cable is accommodated.

For example, Patent Document 1 discloses a rotary connector device in which a rotary member and a fixed member are rotatably assembled together; a flat cable being wound up is accommodated in an accommodating space formed inside; and an unwanted substance intrusion inhibiting means for inhibiting intrusion of unwanted substances into the accommodating space is provided. The disclosure of Patent Document 1 indicates that the flat cable is accommodated in the accommodating space while having a U-turn portion so that the U-turn portion makes it possible to tighten and loosen the winding of the flat cable. Such a rotary connector device is used, for example, as being incorporated in an automobile by a user who purchased the device.

In a conventional mechanical steering wheel mechanism, a lock-to-lock number of turns of a steering wheel is approximately 3.2, which means that an end point of a turn from a neutral position toward the left is approximately 1.6 turns, whereas an end point of a turn from the neutral position toward the right is approximately 1.6 turns.

To make it possible to achieve the lock-to-lock number of turns of the steering wheel being 3.2, rotary connector devices are configured to enable the number of relative turns (a total number of turns) between the rotary member and the fixed member to be approximately 5.

In relation to the above, the abovementioned rotary connector device has five positioning states in which the rotary member has the same rotary position in appearance with respect to the fixed member. Specifically, the following five positioning states are mutually the same in appearance: a neutral positioning in which the rotary member is in a neutral position with respect to the fixed member; a positioning achieved as a result of the rotary member making one turn from the neutral position in a winding tightening direction for the flat cable (which hereinafter may be referred to as "one tightening turn positioning"); a positioning achieved as a result of the rotary member making two turns from the neutral position in the winding tightening direction for the flat cable (which hereinafter may be referred to as "two tightening turn positioning"); a positioning achieved as a result of the rotary member making one turn from the neutral position in a winding loosening direction for the flat cable (which hereinafter may be referred to as "one loosening turn positioning"); and a positioning achieved as a result of the rotary member making two turns from the neutral position in the winding loosening direction for the flat cable (which hereinafter may be referred to as "two loosening turn positioning").

### Citation List

### Patent Document

Patent Document 1: PCT International Publication No. WO 2017/170752

### DISCLOSURE OF THE INVENTION

### Problems to be Solved by the Invention

However, in the five positioning states, different loads are imposed on the flat cable accommodated in the accommodating space. Thus, when the five positioning states are erroneously recognized, there is a possibility that the flat cable may be damaged, or the U-turn portion of the flat cable may irreversibly be deformed.

For example, in the neutral positioning, there will be no problem with the load imposed on the flat cable, even when the rotary member is turned two more times in the winding tightening direction or the winding loosening direction. In contrast, in a case where the two tightening turn positioning is erroneously recognized as the neutral positioning or the one tightening turn positioning, if an attempt is made to turn the rotary member one more time in the winding tightening direction, the flat cable may be damaged by the excessive tightening of the winding. Similarly, in a case where the two loosening turn positioning is erroneously recognized as the neutral positioning or the one loosening turn positioning, if an attempt is made to turn the rotary member one more time in the winding loosening direction, the U-turn portion of the flat cable may irreversibly be deformed by the excessive loosening of the winding.

For this reason, rotary connector devices are usually configured so that the fixed member and the rotary member in the neutral position are fixed by a neutral mechanism such as a neutral pin or a neutral tape, so that the user is able to recognize the neutral position without fail. However, from viewpoints of environment protection and costs, it is desired not to use the neutral mechanism.

In recent years, in place of the conventional mechanical steering wheel mechanism, using a steer-by-wire type, which involves an electronic steering wheel mechanism, is being considered. According to the steer-by-wire type, it is possible to make the lock-to-lock number of turns of a steering wheel less than one. Therefore, a rotary connector device that does not use a neutral mechanism is being considered.

An object of the present invention is to provide a rotary connector device that facilitates recognizing a neutral position of a rotary member with respect to a fixed member without using a neutral mechanism and that is capable of avoiding the occurrence of excessive tightening and excessive loosening of winding of a flat cable.

### Means for Solving the Problems

The present inventor completed the present invention based on the findings that, by making a rotary member and a fixed member have specific structures, it is possible to realize a rotary connector device that facilitates recognizing a neutral position of the rotary member with respect to the fixed member without using a neutral mechanism and that is capable of avoiding the occurrence of excessive tightening and excessive loosening of winding of a flat cable.
(1) A rotary connector device according to the present invention includes: a rotary member including a ceiling plate part and an inner circumferential cylinder part, the ceiling plate part having an annular shape, the inner circumferential cylinder part being formed at an inner circumferential edge of the ceiling plate part; a fixed member including a bottom plate part and an outer circumferential cylinder part, the bottom plate part having an annular shape and being disposed to face and to be apart from the ceiling plate part of the rotary member, the outer circumferential cylinder part being formed at an outer circumferential edge of the bottom plate part; and a flat cable accommodated in an accommodating space defined between the inner circumferential cylinder part of the rotary member and the outer circumferential cylinder part of the fixed member. The rotary member is assembled to be rotatable around a rotation axis line of the rotary member, relative to the fixed member. The rotary member has a sliding surface that slides with respect to the fixed member. The fixed member has a sliding receiving surface facing the sliding surface of the rotary member. A recessed part having a C-shape that extends along an imaginary circle centered on the rotation axis line is formed on one selected from between the sliding surface and the sliding receiving surface. A projection part capable of moving within the recessed part is provided on an other of the sliding surface and the sliding receiving surface. A rotatable range for the rotary member to rotate relative to the fixed member is regulated by an extending length of the recessed part in which the projection part is allowed to move.
(2) In the rotary connector device according to (1), it is preferable that the recessed part is formed on the sliding receiving surface of the fixed member and that the projection part is provided on the sliding surface of the rotary member.
(3) In the rotary connector device according to (1), it is preferable that the recessed part is formed on the sliding surface of the rotary member and that the projection part is provided on the sliding receiving surface of the fixed member.
(4) In the rotary connector device according to (1), (2), or (3), it is preferable that the sliding surface is formed on a bottom face of the inner circumferential cylinder part forming part of the rotary member and that the sliding receiving surface is formed on an upper face of the bottom plate part forming part of the fixed member.
(5) In the rotary connector device according to (1), (2), or (3), it is preferable that the fixed member further includes an annular supporting part that annularly extends inward from an inner face of an upper portion of the outer circumferential cylinder part and to face a lower face of an outer circumferential portion of the ceiling plate part of the rotary member, while the sliding surface is formed on the lower face of the outer circumferential portion of the ceiling plate part that forms part of the rotary member, and the sliding receiving surface is formed on an upper face of the annular supporting part of the outer circumferential cylinder part that forms part of the fixed member.
(6) In the rotary connector device according to (1), (2), or (3), it is preferable that the recessed part is either a groove or a slit.
(7) In the rotary connector device according to (1), (2), or (3), it is preferable that the flat cable is connected to a steering wheel adapted for a steer-by-wire type.

### Effects of the Invention

The present invention is able to provide a rotary connector device that facilitates recognizing the neutral position of the rotary member with respect to the fixed member without using a neutral mechanism and that is capable of avoiding the occurrence of excessive tightening and excessive loosening of the winding of the flat cable.

### BRIEF DESCRIPTION OF THE DRAWINGS

FIG. 1 is a schematic perspective view showing a rotary connector device according to a first embodiment of the present invention;
FIG. 2 is a schematic exploded perspective view of the rotary connector device in FIG. 1;
FIG. 3 is a schematic plan view showing a fixed member of the rotary connector device in FIG. 1;
FIG. 4 is a schematic cross-sectional view showing a cross-section taken at line A-A in FIG. 3, of the rotary connector device according to the first embodiment;
FIG. 5 is a schematic plan view showing a rotary member and the fixed member of the rotary connector device according to the first embodiment. FIG. 5(A) shows the rotary member. FIG. 5(B) shows the fixed member;
FIG. 6 is a schematic cross-sectional view showing a cross-section taken at the same line as line A-A in FIG. 3, of a rotary connector device according to a second embodiment;
FIG. 7 is a schematic plan view showing a rotary member and a fixed member of the rotary connector device according to the second embodiment. FIG. 7(A) shows the rotary member. FIG. 7(B) shows the fixed member;
FIG. 8 is a schematic cross-sectional view showing a cross-section taken at the same line as line A-A in FIG. 3, of a rotary connector device according to a third embodiment;
FIG. 9 is a schematic plan view showing a rotary member and a fixed member of the rotary connector device according to the third embodiment. FIG. 9(A) shows the rotary member. FIG. 9(B) shows the fixed member;
FIG. 10 is a schematic cross-sectional view showing a cross-section taken at the same line as line A-A in FIG. 3, of a rotary connector device according to a fourth embodiment;
FIG. 11 is a schematic plan view showing a rotary member and a fixed member of the rotary connector device according to the fourth embodiment. FIG. 11(A) shows the rotary member. FIG. 11(B) shows the fixed member;
FIG. 12 is a schematic cross-sectional view showing a cross-section taken at the same line as line A-A in FIG. 3, of a rotary connector device according to a fifth embodiment;
FIG. 13 is a schematic plan view showing a rotary member and a fixed member of the rotary connector device according to the fifth embodiment. FIG. 13(A) shows the rotary member. FIG. 13(B) shows the fixed member;
FIG. 14 is a schematic cross-sectional view showing a cross-section taken at the same line as line A-A in FIG. 3, of a rotary connector device according to a sixth embodiment;
FIG. 15 is a schematic plan view showing a rotary member and a fixed member of the rotary connector device according to the sixth embodiment. FIG. 15(A) shows the rotary member. FIG. 15(B) shows the fixed member;
FIG. 16 is a schematic cross-sectional view showing a rotary connector device according to a seventh embodiment. FIG. 16(A) shows the rotary connector device in a 120° positioning in a winding loosening direction. FIG. 16(B) shows the rotary connector device in a neutral positioning. FIG. 16(C) shows the rotary connector device in a 120° positioning in a winding tightening direction;
FIG. 17 is a schematic cross-sectional view showing a rotary connector device according to an eighth embodiment. FIG. 17(A) shows the rotary connector device in a 120° positioning in the winding loosening direction. FIG. 17(B) shows the rotary connector device in a neutral positioning. FIG. 17(C) shows the rotary connector device in a 120° positioning in the winding tightening direction;
FIG. 18 is a schematic cross-sectional view showing a rotary connector device according to a ninth embodiment. FIG. 18(A) shows the rotary connector device in a 120° positioning in the winding loosening direction. FIG. 18(B) shows the rotary connector device in a neutral positioning. FIG. 18(C) shows the rotary connector device in a 120° positioning in the winding tightening direction; and
FIG. 19 is a schematic cross-sectional view showing a rotary connector device according to a tenth embodiment. FIG. 19(A) shows the rotary connector device in a 120° positioning in the winding loosening direction. FIG. 19(B) shows the rotary connector device in a neutral positioning. FIG. 19(C) shows the rotary connector device in a 120° positioning in the winding tightening direction.

### PREFERRED MODE FOR CARRYING OUT THE INVENTION

The following will describe embodiments of the present invention, with reference to the drawings. The shapes and the dimensions in the drawings have been changed as appropriate, for the sake of convenience in explanations. Thus, the present invention is not constrained by the shapes in the drawings.

### [Rotary connector device]

### <First Embodiment>

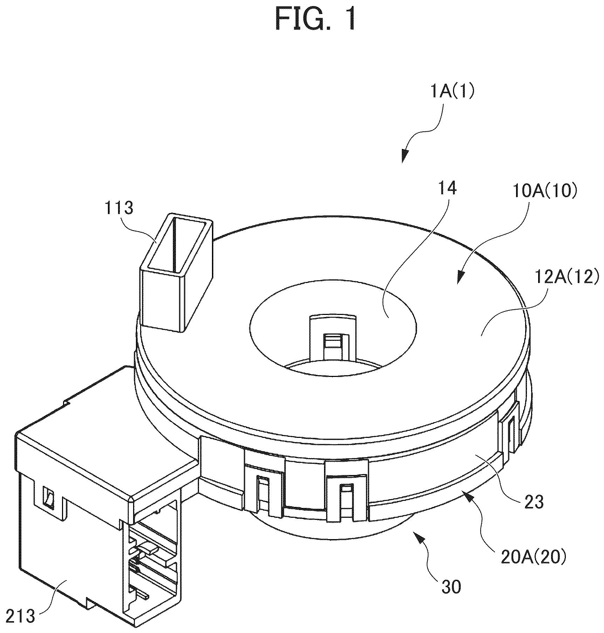

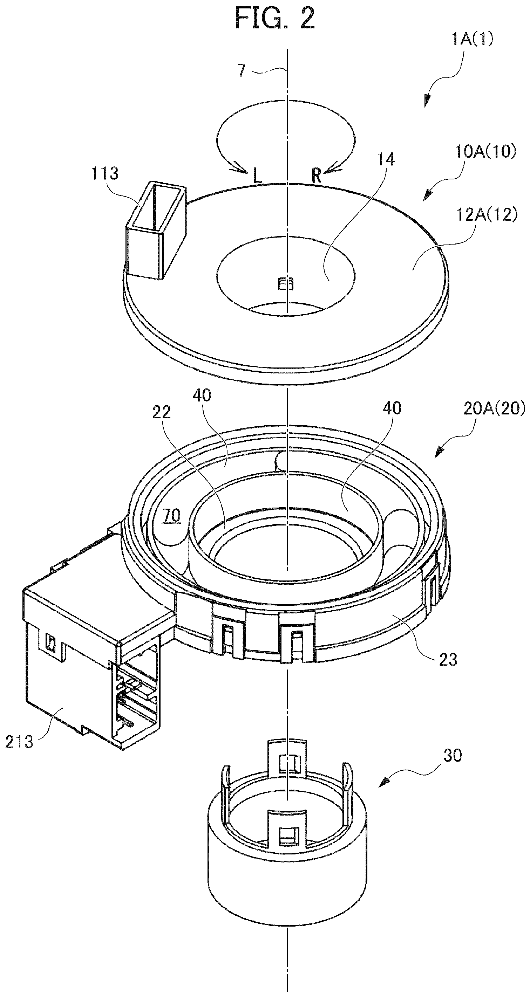

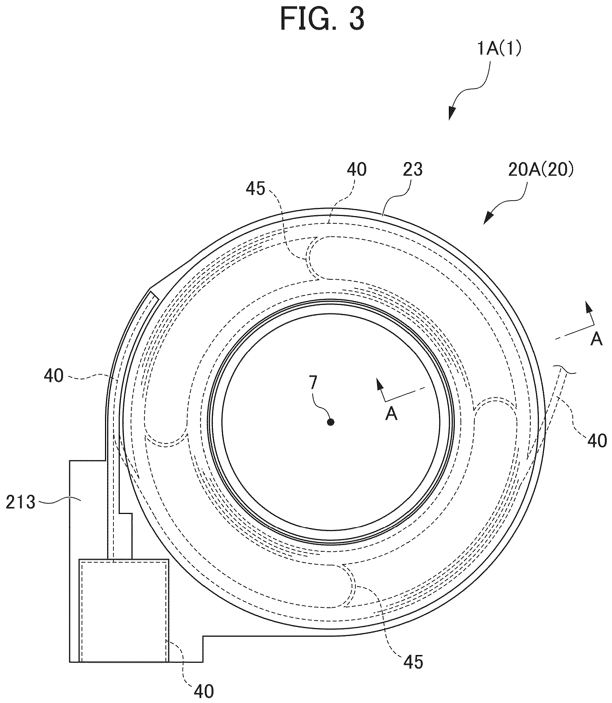

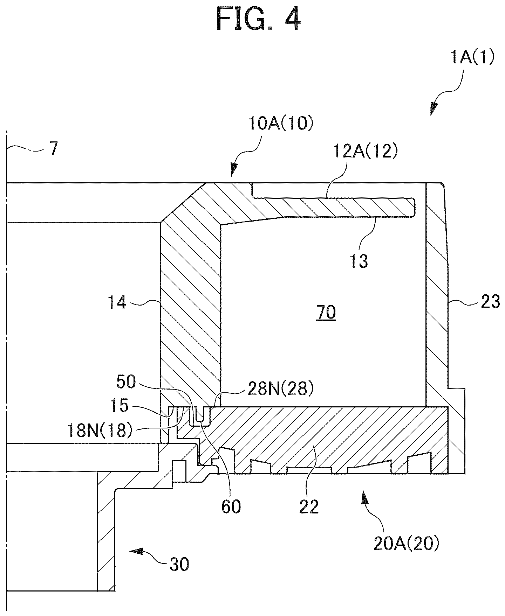

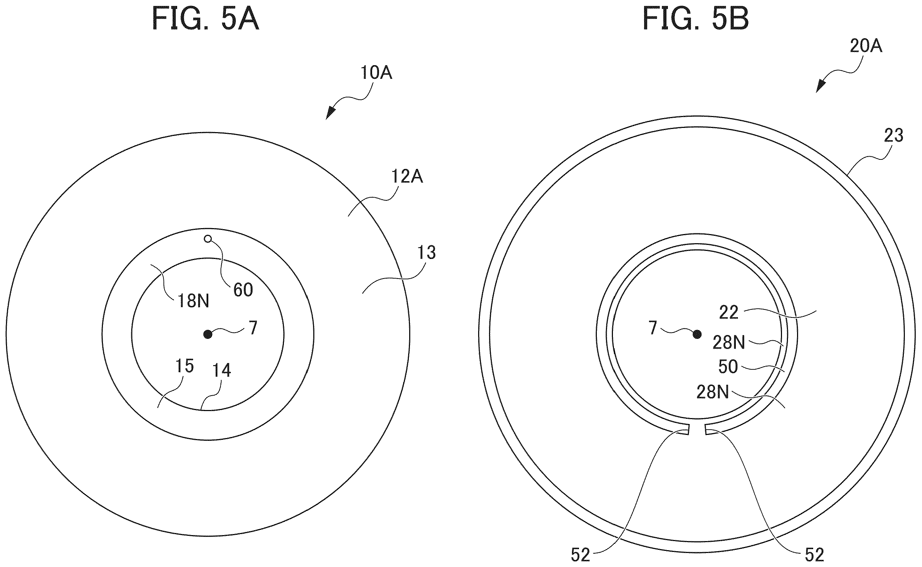

FIG. 1 is a schematic perspective view showing a rotary connector device according to a first embodiment of the present invention. FIG. 2 is a schematic exploded perspective view of the rotary connector device in FIG. 1. FIG. 3 is a schematic plan view showing a fixed member of the rotary connector device in FIG. 1. FIG. 4 is a schematic cross-sectional view showing a cross-section taken at line A-A in FIG. 3, of the rotary connector device according to the first embodiment. FIG. 5 is a schematic plan view showing a rotary member and the fixed member of the rotary connector device according to the first embodiment. FIG. 5(A) shows the rotary member. FIG. 5(B) shows the fixed member.

A rotary connector device 1A (1) according to the first embodiment includes a rotary member 10A (10), a fixed member 20A (20), and flat cables 40. In the rotary connector device 1A, the rotary member 10A is assembled to be rotatable around a rotation axis line 7 of the rotary member 10A, relative to the fixed member 20A. More specifically, in FIG. 2, the rotary member 10A positioned above the fixed member 20A is assembled to be rotatable relative to the fixed member 20A, in collaboration with a sleeve 30 positioned beneath the fixed member 20A. With this configuration, the rotary member 10A of the rotary connector device 1A is rotatable in an L direction and an R direction shown in FIG. 2.

The rotary member 10A is provided so as to follow steering of a steering wheel (not shown). The fixed member 20A is fixed to a steering column (not shown).

As shown in FIG. 2 to FIG. 4, the rotary connector device 1A includes the flat cables 40 accommodated in an accommodating space 70 defined between an inner circumferential cylinder part 14 of the rotary member 10A and an outer circumferential cylinder part 23 of the fixed member 20A. As shown in FIG. 3, the flat cables 40 are accommodated in the accommodating space 70 in such a manner that the ribbon-like flat cables 40 each have a U-turn part 45 where the flat cable 40 is bent in a U-shape to enable tightening and loosening of the winding. The flat cables 40 are omitted from FIG. 4.

### (Rotary member)

As shown in FIG. 2, the rotary member 10A includes a ceiling plate part 12A (12) having an annular shape and the inner circumferential cylinder part 14 formed at an inner circumferential edge of the ceiling plate part 12A. Provided on a lower face 13 side of the ceiling plate part 12A is a bottom plate part 22 of the fixed member 20A. Provided in a portion of the ceiling plate part 12A is a rotary member-side connector accommodating part 113 accommodating therein a rotary member-side connector (not shown) electrically connected to the steering wheel. The flat cables 40 accommodated in the accommodating space 70 are configured to be electrically connected to the steering wheel via the rotary member-side connector.

As shown in FIG. 4 and FIG. 5(A), the rotary member 10A has a sliding surface 18N (18) that slides with respect to the fixed member 20A. More specifically, regarding the rotary member 10A, within the bottom face of the inner circumferential cylinder part 14, a bottom face 15 facing the bottom plate part 22 of the fixed member 20A and having an annular shape in a planar view serves as the sliding surface 18N. In other words, the sliding surface 18N is formed on the bottom face 15 of the inner circumferential cylinder part 14 that forms part of the rotary member 10A. The rotary member 10A of the rotary connector device 1A has the single sliding surface 18N; however, in another embodiment of the rotary connector device 1 of the present invention, two or more sliding surfaces 18 may be provided.

In this situation, "to slide" is a concept including situations where two facing members slide while keeping direct contact with each other and slide indirectly via a lubrication member, a lubricant, or the like.

For example, the rotary member 10A may be configured by using polybutylene terephthalate (PBT), polyacetal, or the like. Among those examples, due to high self-lubricating properties thereof, polybutylene terephthalate (PBT) and polyacetal are preferable, because it is possible to easily realize a rotary member 10A causing little friction and little noise during the rotation and sliding. Further, it is desirable to use mutually-different materials for the rotary member 10A and the fixed member 20A described below, because it is possible to easily maintain the characteristics of causing little friction and little noise during the rotation and sliding.

### (Fixed member)

As shown in FIG. 2, the fixed member 20A includes the bottom plate part 22 having an annular shape and being disposed to face and to be apart from the ceiling plate part 12A of the rotary member 10A; and the outer circumferential cylinder part 23 formed at an outer circumferential edge of the bottom plate part 22. Provided in a portion of the outer circumferential cylinder part 23 is a fixed member-side connector accommodating part 213 accommodating therein a fixed member-side connector (not shown) electrically connected to the steering column. The flat cables 40 accommodated in the accommodating space 70 are configured to be electrically connected to the steering column via the fixed member-side connector.

As shown in FIG. 4 and FIG. 5(B), the fixed member 20A has a sliding receiving surface 28N (28) facing the sliding surface 18N of the rotary member 10A. More specifically, the fixed member 20A has the sliding receiving surface 28N that slides with respect to the rotary member 10A. Even more specifically, regarding the fixed member 20A, within the bottom plate part 22, an annular portion facing the bottom face 15 of the inner circumferential cylinder part 14 of the rotary member 10A serves as the sliding receiving surface 28N. In other words, the sliding receiving surface 28N is formed on the upper face of the bottom plate part 22 that forms part of the fixed member 20A. The fixed member 20A of the rotary connector device 1A has the single sliding receiving surface 28N; however, in another embodiment of the rotary connector device 1 of the present invention, two or more sliding receiving surfaces 28 may be provided.

For example, the fixed member 20A may be configured by using polybutylene terephthalate (PBT), polyacetal, or the like. Among those examples, due to high self-lubricating properties thereof, polybutylene terephthalate (PBT) and polyacetal are preferable, because it is possible to easily realize a fixed member 20A causing little friction and little noise during the rotation and sliding. Further, it is desirable to use mutually-different materials for the fixed member 20A and the rotary member 10A, because it is possible to easily maintain the characteristics of causing little friction and little noise during the rotation and sliding.

### (Accommodating space)

In the rotary connector device 1A, the accommodating space 70 is defined between the inner circumferential cylinder part 14 of the rotary member 10A and the outer circumferential cylinder part 23 of the fixed member 20A. More specifically, in the rotary connector device 1A, the accommodating space 70 is defined between the inner circumferential cylinder part 14 and the ceiling plate part 12A of the rotary member 10A and the outer circumferential cylinder part 23 and the bottom plate part 22 of the fixed member 20A.

### (Flat cable)

The flat cables 40 are accommodated in the accommodating space 70 in such a manner that the ribbon-like flat cables 40 each have the U-turn part 45 where the flat cable 40 is bent in a U-shape to enable tightening and loosening of the winding. As shown in FIG. 3, in the rotary connector device 1A, four flat cables 40 are accommodated, and thus, there are four U-turn parts 45. As for each of the flat cables 40, one connector (not shown) each is connected to one end and to the other end thereof. To the four flat cables 40, eight connectors in total are connected, so that signals in four systems can be transmitted.

The flat cables 40 shown in FIG. 3 are accommodated in the accommodating space 70 by using a multiple U-turn scheme. However, possible schemes for accommodating the flat cables 40 in the accommodating space 70 are not limited to the multiple U-turn scheme. For example, a spiral turn scheme, a roller U-turn scheme, or the like may be used. Accommodating the flat cables 40 in the accommodating space 70 by using the multiple U-turn scheme is preferable from a viewpoint of realizing a multi-circuit structure because a plurality of flat cables can be used easily.

### (Recessed part and Projection part)

In the rotary connector device 1 of the present invention, formed on one selected from between the sliding surface 18 and the sliding receiving surface 28 is a recessed part 50 having a C-shape that extends along a circle centered on the rotation axis line 7. Because the recessed part 50 has the shape extending like a C, stopper parts 52, 52 are formed at the opposite ends in the longitudinal direction of the C-shape. In the rotary connector device 1 of the present invention, a center angle, which is the angle formed by the stopper parts 52, 52 of the recessed part 50 with respect to the center passed through by the rotation axis line 7, is smaller than 360°. Further, in the rotary connector device 1 of the present invention, a projection part 60 capable of moving within the recessed part 50 is provided on the other of the sliding surface 18 and the sliding receiving surface 28.

With this configuration, in the rotary connector device 1 of the present invention, when the rotary member 10 turns relative to the fixed member 20, the projection part 60 moves within the recessed part 50 formed on the one selected from between the sliding surface 18 of the rotary member 10 and the sliding receiving surface 28 of the fixed member 20, the projection part 60 being provided on the other of the sliding surface 18 of the rotary member 10 and the sliding receiving surface 28 of the fixed member 20. When the projection part 60 abuts against the stopper parts 52, 52, a rotatable range for the rotary member 10 to rotate relative to the fixed member 20 is regulated by an extending length of the recessed part 50 in which the projection part 60 is allowed to move. Accordingly, in the rotary connector device 1, the rotary member 10 is regulated so as to have a rotation angle smaller than 360° with respect to the fixed member 20.

In the rotary connector device 1A shown in FIG. 4 and FIG. 5, the recessed part 50 is formed on the sliding receiving surface 28N of the fixed member 20A, whereas the projection part 60 is provided on the sliding surface 18N of the rotary member 10A.

More specifically, in the rotary connector device 1A, the recessed part 50 having the C-shape that extends along a circle centered on the rotation axis line 7 is formed on the sliding receiving surface 28N of the fixed member 20A, while the projection part 60 is provided on the sliding surface 18N of the rotary member 10A.

In other words, in the rotary connector device 1A, the recessed part 50 is formed on the sliding receiving surface 28N provided on a surface of the bottom plate part 22 of the fixed member 20A. Further, in the rotary connector device 1A, the projection part 60 is provided on the sliding surface 18N provided on the bottom face 15 which has an annular shape in a planar view and is a certain portion of the bottom face of the inner circumferential cylinder part 14 of the rotary member 10A that faces the bottom plate part 22.

With this configuration, in the rotary connector device 1A of the present invention, when the rotary member 10A turns relative to the fixed member 20A, the projection part 60 provided on the sliding surface 18N of the rotary member 10A moves within the recessed part 50 formed on the sliding receiving surface 28N of the fixed member 20A. When the projection part 60 abuts against the stopper parts 52, 52, the rotatable range for the rotary member 10A to rotate relative to the fixed member 20A is regulated by the extending length of the recessed part 50 in which the projection part 60 is allowed to move. Accordingly, in the rotary connector device 1A, the rotary member 10A is regulated so as to have a rotation angle smaller than 360° with respect to the fixed member 20A.

In the rotary connector device 1A, the recessed part 50 formed on the sliding receiving surface 28N of the fixed member 20A is formed as a groove that does not penetrate the member (the bottom plate part 22) having the recessed part 50 formed. However, in the rotary connector device 1 of the present invention, the recessed part 50 does not necessarily need to be a groove. It is also acceptable to form the recessed part 50 as a slit that penetrates the member having the recessed part 50 formed. In other words, a modification example of the rotary connector device 1A may be a rotary connector device in which the recessed part 50 is a slit penetrating the member. As explained herein, in the rotary connector device 1 of the present invention, the recessed part 50 may be either a groove or a slit. In particular, configuring the recessed part 50 as a groove is preferable because it is possible to easily prevent intrusion of unwanted substances.

As for the rotary connector device 1A, it is desirable to connect the flat cables 40 to a steering wheel adapted for the steer-by-wire type, because it is possible to easily adopt the rotary connector device 1A in which the center angle, which is the angle formed by the stopper parts 52, 52 of the recessed part 50 with respect to the center passed through by the rotation axis line 7, is smaller than 360°.

### (Actions)

In the rotary connector device 1A, when the rotary member 10A turns relative to the fixed member 20A, the projection part 60 provided on the sliding surface 18N of the rotary member 10A moves within the recessed part 50 formed on the sliding receiving surface 28N of the fixed member 20A. When the projection part 60 abuts against the stopper parts 52, 52, the rotatable range for the rotary member 10A to rotate relative to the fixed member 20A is regulated by the extending length of the recessed part 50 in which the projection part 60 is allowed to move. Accordingly, in the rotary connector device 1A, the rotary member 10A is regulated so as to have a rotation angle smaller than 360° with respect to the fixed member 20A. Consequently, the rotary connector device 1A is able to avoid the occurrence of excessive tightening and excessive loosening of the winding of the flat cables.

In the rotary connector device 1A, the center angle, which is the angle formed by the stopper parts 52, 52 of the recessed part 50 with respect to the center passed through by the rotation axis line 7, is smaller than 360°. With this configuration, the rotary connector device 1A makes it possible to achieve the neutral positioning without fail, by simply placing the rotary member 10A in a neutral position by appearance.

In the rotary connector device 1A, because the recessed part 50 formed on the sliding receiving surface 28N of the fixed member 20A is a groove, unwanted substances do not easily intrude the accommodating space 70.

### (Advantageous effects)

The rotary connector device 1A makes it possible to provide a rotary connector device that facilitates recognizing the neutral position of the rotary member with respect to the fixed member without using a neutral mechanism and that is capable of avoiding the occurrence of excessive tightening and excessive loosening of the winding of the flat cables.

The rotary connector device 1A makes it possible to provide a rotary connector device in which unwanted substances do not easily intrude the accommodating space 70.

### <Second Embodiment>

A rotary connector device 1B (1) according to a second embodiment has an external appearance and a schematic interior shape that are the same as or similar to those of the rotary connector device 1A according to the first embodiment. Thus, in the following explanations of the rotary connector device 1B according to the second embodiment, FIG. 1 to FIG. 3 that were used for explaining the rotary connector device 1A according to the first embodiment will be conveniently used as appropriate. More specifically, the rotary connector device 1B according to the second embodiment will be explained by conveniently using the rotary connector device 1 shown in FIG. 1 to FIG. 3. Even more specifically, in the explanations of the present embodiment, the rotary connector device 1A, the rotary member 10A, and the like in FIG. 1 to FIG. 3 will be referred to as the rotary connector device 1B, a rotary member 10B, and the like, as appropriate.

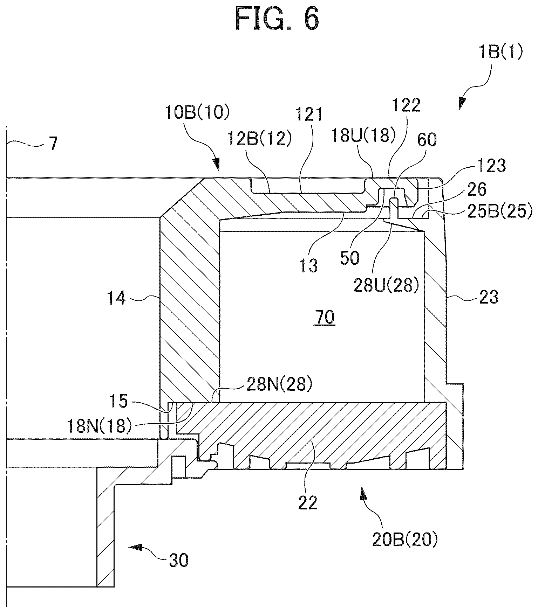

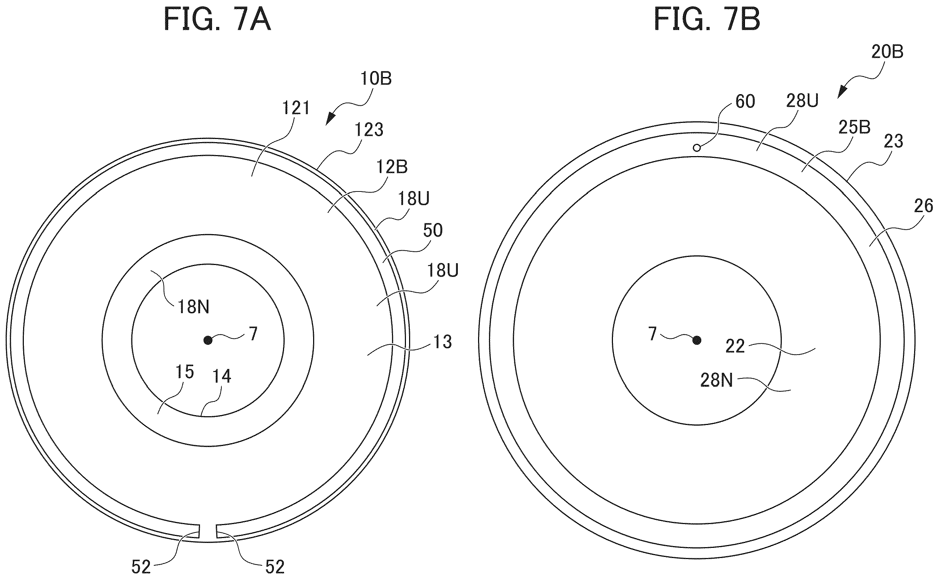

FIG. 6 is a schematic cross-sectional view showing a cross-section taken at the same line as line A-A in FIG. 3, of the rotary connector device according to the second embodiment. FIG. 7 is a schematic plan view showing the rotary member and a fixed member of the rotary connector device according to the second embodiment. FIG. 7(A) shows the rotary member. FIG. 7(B) shows the fixed member.

The rotary connector device 1B (1) according to the second embodiment includes the rotary member 10B (10), a fixed member 20B (20), and the flat cables 40. In the rotary connector device 1B, the rotary member 10B is assembled to be rotatable around the rotation axis line 7 of the rotary member 10B, relative to the fixed member 20B. More specifically, in FIG. 2, the rotary member 10B positioned above the fixed member 20B is assembled to be rotatable relative to the fixed member 20B, in collaboration with the sleeve 30 positioned beneath the fixed member 20B.

The rotary connector device 1B according to the second embodiment is almost the same as the rotary connector device 1A according to the first embodiment, except that the rotary member 10B is used in place of the rotary member 10A, while the fixed member 20B is used in place of the fixed member 20A. Further, similarly to the rotary member 10A, the rotary member 10B is provided so as to follow steering of a steering wheel (not shown). Similarly to the fixed member 20A, the fixed member 20B is fixed to a steering column (not shown).

Thus, in the following sections, in the rotary connector device 1B according to the second embodiment, some of the constituent elements that are the same as those in the rotary connector device 1A according to the first embodiment will be referred to by using the same reference characters, and explanations of the structure and actions will be omitted or simplified.

As shown in FIG. 2, FIG. 3, and FIG. 6, the rotary connector device 1B includes the flat cables 40 accommodated in the accommodating space 70 defined between the inner circumferential cylinder part 14 of the rotary member 10B and the outer circumferential cylinder part 23 of the fixed member 20B. The flat cables 40 are omitted from FIG. 6.

### (Rotary member)

As shown in FIG. 2, the rotary member 10B includes a ceiling plate part 12B (12) having an annular shape and the inner circumferential cylinder part 14 formed at an inner circumferential edge of the ceiling plate part 12B.

Further, as shown in FIG. 6 and FIG. 7, the ceiling plate part 12B includes: a ceiling flat plate part 121 having an annular and flat-plate-like shape; a ceiling groove frame part 122 that is an outer circumferential portion being provided on the outer circumference of the ceiling flat plate part 121 and forming the recessed part 50 on the fixed member 20B side; and a ceiling outer circumferential part 123 constituting an outer circumferential face of the ceiling groove frame part 122. Provided on the lower face 13 side of the ceiling plate part 12B is the bottom plate part 22 of the fixed member 20B.

As shown in FIG. 6 and FIG. 7(A), the rotary member 10B has sliding surfaces 18N (18) and 18U (18) that slide with respect to the fixed member 20B. More specifically, regarding the rotary member 10B, within the bottom face of the inner circumferential cylinder part 14, the bottom face 15 facing the bottom plate part 22 of the fixed member 20B and having an annular shape in a planar view serves as the sliding surface 18N. In other words, the sliding surface 18N is formed on the bottom face 15 of the inner circumferential cylinder part 14 that forms part of the rotary member 10B. Further, regarding the rotary member 10B, of the surfaces of the ceiling plate part 12B, the lower face 13 facing an annular supporting part 25B (25) of the fixed member 20B serves as the sliding surface 18U. In other words, the sliding surface 18U is formed on the lower face of the ceiling groove frame part 122 which is the outer circumferential portion of the ceiling plate part 12B that forms part of the rotary member 10B. The sliding surface 18U of the rotary member 10B is a region including the ceiling groove frame part 122 which is the outer circumferential portion.

Because the material of the rotary member 10B is the same as the material of the rotary member 10A, explanations thereof will be omitted.

### (Fixed member)

As shown in FIG. 2, the fixed member 20B includes the bottom plate part 22 having an annular shape and being disposed to face and to be apart from the ceiling plate part 12B of the rotary member 10B; and the outer circumferential cylinder part 23 formed at the outer circumferential edge of the bottom plate part 22.

As shown in FIG. 6 and FIG. 7(B), the fixed member 20B further includes the annular supporting part 25B (25) formed so as to annularly extend inward from an inner face of the upper portion of the outer circumferential cylinder part 23 and to face the lower face of the ceiling groove frame part 122 being the outer circumferential portion of the ceiling plate part 12B of the rotary member 10B.

As shown in FIG. 6 and FIG. 7(B), the fixed member 20B has sliding receiving surfaces 28N (28) and 28U (28) that respectively face the sliding surfaces 18N and 18U of the rotary member 10B. More specifically, the fixed member 20B has the sliding receiving surfaces 28N and 28U that slide with respect to the rotary member 10B. Even more specifically, regarding the fixed member 20B, within the bottom plate part 22, an annular portion facing the bottom face 15 of the inner circumferential cylinder part 14 of the rotary member 10B serves as the sliding receiving surface 28N. In other words, the sliding receiving surface 28N is formed on the upper face of the bottom plate part 22 that forms part of the fixed member 20B. Further, as for the annular supporting part 25B, of the surfaces of the annular supporting part 25B, an upper face 26 facing the ceiling plate part 12B serves as the sliding receiving surface 28U (28). In other words, the sliding receiving surface 28U is formed on the upper face 26 of the annular supporting part 25B of the outer circumferential cylinder part 23 that forms part of the fixed member 20B.

Because the material of the fixed member 20B is the same as the material of the fixed member 20A, explanations thereof will be omitted.

### (Accommodating space)

In the rotary connector device 1B, the accommodating space 70 is defined between the inner circumferential cylinder part 14 of the rotary member 10B and the outer circumferential cylinder part 23 of the fixed member 20B. More specifically, in the rotary connector device 1B, the accommodating space 70 is defined between the inner circumferential cylinder part 14 and the ceiling plate part 12B of the rotary member 10B and the outer circumferential cylinder part 23 and the bottom plate part 22 of the fixed member 20B.

### (Recessed part and projection part)

In the rotary connector device 1B shown in FIG. 6 and FIG. 7, the recessed part 50 is formed on the sliding surface 18U of the rotary member 10B, whereas the projection part 60 is provided on the sliding receiving surface 28U of the fixed member 20B.

More specifically, in the rotary connector device 1B, the recessed part 50 having a C-shape that extends along a circle centered on the rotation axis line 7 is formed on the sliding surface 18U of the rotary member 10B, while the projection part 60 is provided on the sliding receiving surface 28U of the fixed member 20B.

In other words, in the rotary connector device 1B, the recessed part 50 is formed on the sliding surface 18U provided on the lower face 13 which is one of the surfaces of the ceiling plate part 12B of the rotary member 10B that faces the annular supporting part 25B. Further, in the rotary connector device 1B, the projection part 60 is provided on the sliding receiving surface 28U provided on the upper face 26 which is one of the surfaces of the annular supporting part 25B of the fixed member 20B that faces the ceiling plate part 12B.

In the rotary connector device 1B, the recessed part 50 formed on the sliding surface 18U of the rotary member 10B is formed as a groove that does not penetrate the member (the ceiling plate part 12B) having the recessed part 50 formed. However, a modification example of the rotary connector device 1B may be a rotary connector device in which the recessed part 50 is a slit penetrating the member. Because the reason is the same as the reason for the modification example of the rotary connector device 1A, explanations thereof will be omitted.

For the same reason as with the rotary connector device 1A, it is desirable to connect the flat cables 40 of the rotary connector device 1B to a steering wheel adapted for the steer-by-wire type.

### (Actions)

In the rotary connector device 1B, when the rotary member 10B turns relative to the fixed member 20B, the projection part 60 provided on the sliding receiving surface 28U of the fixed member 20B moves within the recessed part 50 formed on the sliding surface 18U of the rotary member 10B. When the projection part 60 abuts against the stopper parts 52, 52, the rotatable range for the rotary member 10B to rotate relative to the fixed member 20B is regulated by the extending length of the recessed part 50 in which the projection part 60 is allowed to move. Accordingly, in the rotary connector device 1, the rotary member 10B is regulated so as to have a rotation angle smaller than 360° with respect to the fixed member 20B. Consequently, the rotary connector device 1B is able to avoid the occurrence of excessive tightening and excessive loosening of the winding of the flat cables.

In the rotary connector device 1B, the center angle, which is the angle formed by the stopper parts 52, 52 of the recessed part 50 with respect to the center passed through by the rotation axis line 7, is smaller than 360°. With this configuration, the rotary connector device 1B makes it possible to achieve the neutral positioning without fail, by simply placing the rotary member 10B in a neutral position by appearance.

In the rotary connector device 1B, because the recessed part 50 formed on the sliding surface 18U of the rotary member 10B is a groove, unwanted substances do not easily intrude the accommodating space 70.

### (Advantageous effects)

The rotary connector device 1B makes it possible to provide a rotary connector device that facilitates recognizing the neutral position of the rotary member with respect to the fixed member without using a neutral mechanism and that is capable of avoiding the occurrence of excessive tightening and excessive loosening of the winding of the flat cables.

The rotary connector device 1B makes it possible to provide a rotary connector device in which unwanted substances do not easily intrude the accommodating space 70.

### <Third Embodiment>

A rotary connector device 1C (1) according to a third embodiment has an external appearance and a schematic interior shape that are the same as or similar to those of the rotary connector device 1A according to the first embodiment. Thus, in the following explanations of the rotary connector device 1C according to the third embodiment, FIG. 1 to FIG. 3 that were used for explaining the rotary connector device 1A according to the first embodiment will be conveniently used as appropriate. More specifically, the rotary connector device 1C according to the third embodiment will be explained by conveniently using the rotary connector device 1 shown in FIG. 1 to FIG. 3. Even more specifically, in the explanations of the present embodiment, the rotary connector device 1A, the rotary member 10A, and the like in FIG. 1 to FIG. 3 will be referred to as the rotary connector device 1C, a rotary member 10C, and the like, as appropriate.

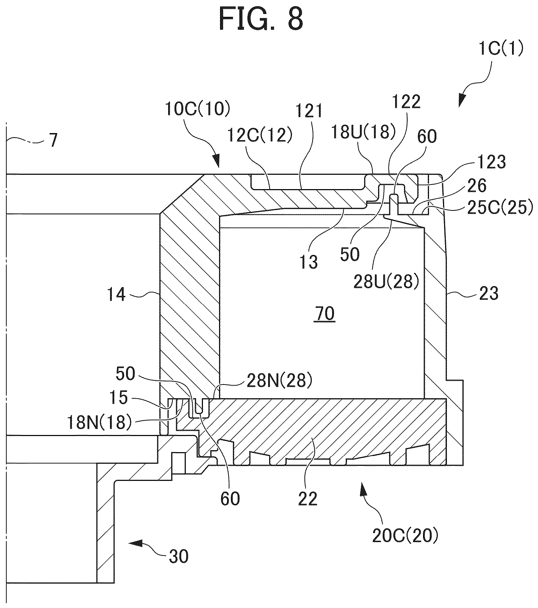

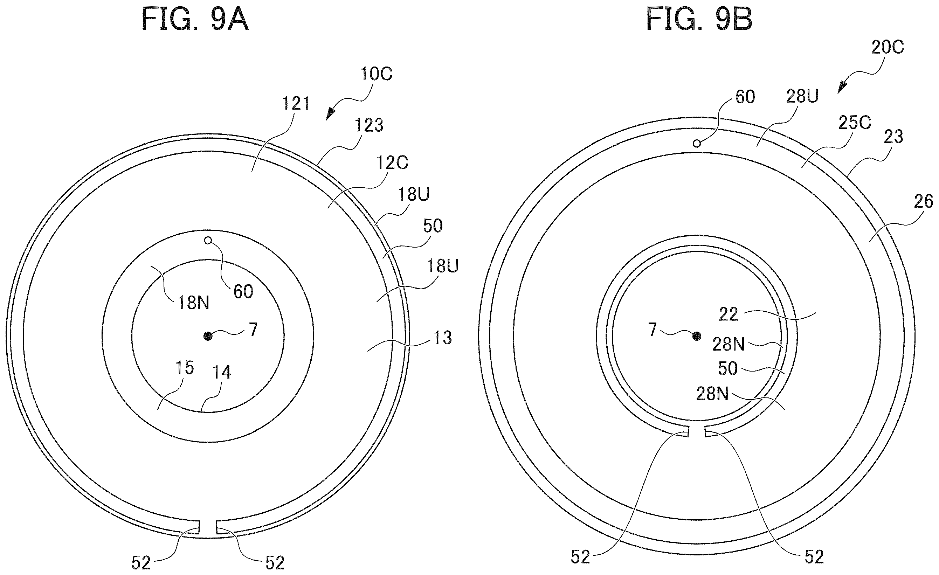

FIG. 8 is a schematic cross-sectional view showing a cross-section taken at the same line as line A-A in FIG. 3, of the rotary connector device according to the third embodiment. FIG. 9 is a schematic plan view showing the rotary member and a fixed member of the rotary connector device according to the third embodiment. FIG. 9(A) shows the rotary member. FIG. 9(B) shows the fixed member.

The rotary connector device 1C (1) according to the third embodiment includes the rotary member 10C (10), a fixed member 20C (20), and the flat cables 40. In the rotary connector device 1C, the rotary member 10C is assembled to be rotatable around the rotation axis line 7 of the rotary member 10C, relative to the fixed member 20C. More specifically, in FIG. 2, the rotary member 10C positioned above the fixed member 20C is assembled to be rotatable relative to the fixed member 20C, in collaboration with the sleeve 30 positioned beneath the fixed member 20C.

The rotary connector device 1C according to the third embodiment is almost the same as the rotary connector device 1A according to the first embodiment, except that the rotary member 10C is used in place of the rotary member 10A, while the fixed member 20C is used in place of the fixed member 20A. Further, similarly to the rotary member 10A, the rotary member 10C is provided so as to follow steering of a steering wheel (not shown). Similarly to the fixed member 20A, the fixed member 20C is fixed to a steering column (not shown).

Thus, in the following sections, in the rotary connector device 1C according to the third embodiment, some of the constituent elements that are the same as those in the rotary connector device 1A according to the first embodiment will be referred to by using the same reference characters, and explanations of the structure and actions will be omitted or simplified.

As shown in FIG. 2, FIG. 3, and FIG. 8, the rotary connector device 1C includes the flat cables 40 accommodated in the accommodating space 70 defined between the inner circumferential cylinder part 14 of the rotary member 10C and the outer circumferential cylinder part 23 of the fixed member 20C. The flat cables 40 are omitted from FIG. 8.

### (Rotary member)

As shown in FIG. 2, the rotary member 10C includes a ceiling plate part 12C (12) having an annular shape and the inner circumferential cylinder part 14 formed at an inner circumferential edge of the ceiling plate part 12C.

Further, as shown in FIG. 8 and FIG. 9, the ceiling plate part 12C includes: the ceiling flat plate part 121 having an annular and flat-plate-like shape; the ceiling groove frame part 122 provided on the outer circumference of the ceiling flat plate part 121 and forming the recessed part 50 on the fixed member 20C side; and the ceiling outer circumferential part 123 constituting the outer circumferential face of the ceiling groove frame part 122.

As shown in FIG. 8 and FIG. 9(A), the rotary member 10C has the sliding surfaces 18N (18) and 18U (18) that slide with respect to the fixed member 20C. More specifically, regarding the rotary member 10C, within the bottom face of the inner circumferential cylinder part 14, the bottom face 15 facing the bottom plate part 22 of the fixed member 20C and having an annular shape in a planar view serves as the sliding surface 18N. In other words, the sliding surface 18N is formed on the bottom face 15 of the inner circumferential cylinder part 14 that forms part of the rotary member 10C. Further, regarding the rotary member 10C, of the surfaces of the ceiling plate part 12C, the lower face 13 facing an annular supporting part 25C (25) of the fixed member 20C serves as the sliding surface 18U. In other words, the sliding surface 18U is formed on the lower face 13 of the ceiling groove frame part 122, which is an outer circumferential portion of the ceiling plate part 12C that forms part of the rotary member 10C. The sliding surface 18U of the rotary member 10C is a region including the ceiling groove frame part 122.

Because the material of the rotary member 10C is the same as the material of the rotary member 10A, explanations thereof will be omitted.

### (Fixed member)

As shown in FIG. 2, the fixed member 20C includes the bottom plate part 22 having an annular shape and being disposed to face and to be apart from the ceiling plate part 12C of the rotary member 10C; and the outer circumferential cylinder part 23 formed at the outer circumferential edge of the bottom plate part 22.

Also, as shown in FIG. 8 and FIG. 9(B), the fixed member 20C further includes the annular supporting part 25C (25) formed so as to annularly extend inward from an inner face of the upper portion of the outer circumferential cylinder part 23 and to face the lower face of the ceiling groove frame part 122 which is the outer circumferential portion of the ceiling plate part 12C of the rotary member 10C.

As shown in FIG. 8 and FIG. 9(B), the fixed member 20C has the sliding receiving surfaces 28N (28) and 28U (28) that respectively face the sliding surfaces 18N and 18U of the rotary member 10C. More specifically, the fixed member 20C has the sliding receiving surfaces 28N and 28U that slide with respect to the rotary member 10C. Even more specifically, regarding the fixed member 20C, within the bottom plate part 22, an annular portion facing the bottom face 15 of the inner circumferential cylinder part 14 of the rotary member 10C serves as the sliding receiving surface 28N. In other words, the sliding receiving surface 28N is formed on the upper face of the bottom plate part 22 that forms part of the fixed member 20C. Further, as for the annular supporting part 25C, of the surfaces of the annular supporting part 25C, the upper face 26 facing the ceiling plate part 12C serves as the sliding receiving surface 28U (28). In other words, the sliding receiving surface 28U is formed on the upper face 26 of the annular supporting part 25B of the outer circumferential cylinder part 23 that forms part of the fixed member 20C.

Because the material of the fixed member 20C is the same as the material of the fixed member 20A, explanations thereof will be omitted.

### (Accommodating space)

In the rotary connector device 1C, the accommodating space 70 is defined between the inner circumferential cylinder part 14 of the rotary member 10C and the outer circumferential cylinder part 23 of the fixed member 20C. More specifically, in the rotary connector device 1C, the accommodating space 70 is defined between the inner circumferential cylinder part 14 and the ceiling plate part 12C of the rotary member 10C and the outer circumferential cylinder part 23 and the bottom plate part 22 of the fixed member 20C.

### (Recessed part and Projection part)

In the rotary connector device 1C shown in FIG. 8 and FIG. 9, recessed parts 50 are formed on the sliding surface 18U of the rotary member 10C and on the sliding receiving surface 28N of the fixed member 20C, whereas projection parts 60 are provided on the sliding receiving surface 28U of the fixed member 20C and on the sliding surface 18N of the rotary member 10C.

More specifically, in the rotary connector device 1C, the recessed parts 50 each having a C-shape that extends along a circle centered on the rotation axis line 7 are formed on the sliding surface 18U of the rotary member 10C and on the sliding receiving surface 28N of the fixed member 20C. In addition, in the rotary connector device 1C, the projection parts 60 are provided on the sliding receiving surface 28U of the fixed member 20C and on the sliding surface 18N of the rotary member 10C.

In other words, in the rotary connector device 1C, the recessed parts 50 are formed on the sliding receiving surface 28N provided on a surface of the bottom plate part 22 of the fixed member 20C and on the sliding surface 18U provided on the lower face 13 which is one of the surfaces of the ceiling plate part 12C of the rotary member 10C that faces the annular supporting part 25C of the fixed member 20C. Further, in the rotary connector device 1C, the projection parts 60 are provided on the sliding surface 18N provided on the bottom face 15 which has an annular shape in a planar view and is a certain portion of the bottom face of the inner circumferential cylinder part 14 of the rotary member 10C that faces the bottom plate part 22 and on the sliding receiving surface 28U provided on the upper face 26 which is one of the surfaces of the annular supporting part 25C of the fixed member 20C that faces the ceiling plate part 12C.

In the rotary connector device 1C, the projection part 60 provided on the sliding receiving surface 28U of the fixed member 20C moves within the recessed part 50 formed on the sliding surface 18U of the rotary member 10C, while the projection part 60 provided on the sliding surface 18N of the rotary member 10C moves within the recessed part 50 formed on the sliding receiving surface 28N of the fixed member 20C.

In the rotary connector device 1C, the recessed parts 50 formed on the sliding surface 18U of the rotary member 10C and the sliding receiving surface 28N of the fixed member 20C are formed as grooves that do not penetrate the members (the ceiling plate part 12C and the bottom plate part 22) having the recessed parts 50 formed. However, a modification example of the rotary connector device 1C may be a rotary connector device in which the recessed parts 50 are slits penetrating the members. Because the reason is the same as the reason for the modification example of the rotary connector device 1A, explanations thereof will be omitted.

For the same reason as with the rotary connector device 1A, it is desirable to connect the flat cables 40 of the rotary connector device 1C to a steering wheel adapted for the steer-by-wire type.

### (Actions)

In the rotary connector device 1C, when the rotary member 10C turns relative to the fixed member 20C, the projection parts 60 provided on the sliding receiving surface 28U of the fixed member 20C and on the sliding surface 18N of the rotary member 10C move within the recessed parts 50 formed on the sliding surface 18U of the rotary member 10C and on the sliding receiving surface 28N of the fixed member 20C. Further, when the projection parts 60 abut against the stopper parts 52, 52, the rotatable range for the rotary member 10C to rotate relative to the fixed member 20C is regulated by the extending lengths of the recessed parts 50 in which the projection parts 60 is allowed to move. Accordingly, in the rotary connector device 1C, the rotary member 10C is regulated so as to have a rotation angle smaller than 360° with respect to the fixed member 20C. Consequently, the rotary connector device 1C is able to avoid the occurrence of excessive tightening and excessive loosening of the winding of the flat cables.

In the rotary connector device 1C, the center angle, which is the angle formed by the stopper parts 52, 52 of the recessed parts 50 with respect to the center passed through by the rotation axis line 7, is smaller than 360°. With this configuration, the rotary connector device 1C makes it possible to achieve the neutral positioning without fail, by simply placing the rotary member 10C in a neutral position by appearance.

In the rotary connector device 1C, because the recessed parts 50 formed on the sliding receiving surface 28N of the fixed member 20C and on the sliding surface 18U of the rotary member 10C are grooves, unwanted substances do not easily intrude the accommodating space 70.

### (Advantageous effects)

The rotary connector device 1C makes it possible to provide a rotary connector device that facilitates recognizing the neutral position of the rotary member with respect to the fixed member without using a neutral mechanism and that is capable of avoiding the occurrence of excessive tightening and excessive loosening of the winding of the flat cables.

The rotary connector device 1C makes it possible to provide a rotary connector device in which unwanted substances do not easily intrude the accommodating space 70.

### <Fourth Embodiment>

A rotary connector device 1D (1) according to a fourth embodiment has an external appearance and a schematic interior shape that are the same as or similar to those of the rotary connector device 1A according to the first embodiment. Thus, in the following explanations of the rotary connector device 1D according to the fourth embodiment, FIG. 1 to FIG. 3 that were used for explaining the rotary connector device 1A according to the first embodiment will be conveniently used as appropriate. More specifically, the rotary connector device 1D according to the fourth embodiment will be explained by conveniently using the rotary connector device 1 shown in FIG. 1 to FIG. 3. Even more specifically, in the explanations of the present embodiment, the rotary connector device 1A, the rotary member 10A, and the like in FIG. 1 to FIG. 3 will be referred to as the rotary connector device 1D, a rotary member 10D, and the like, as appropriate.

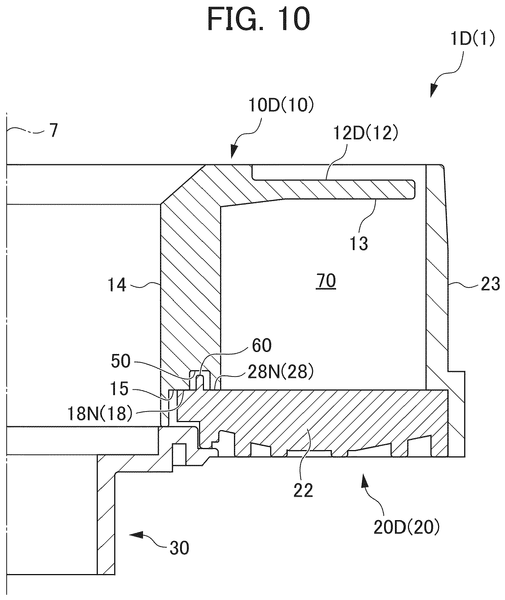

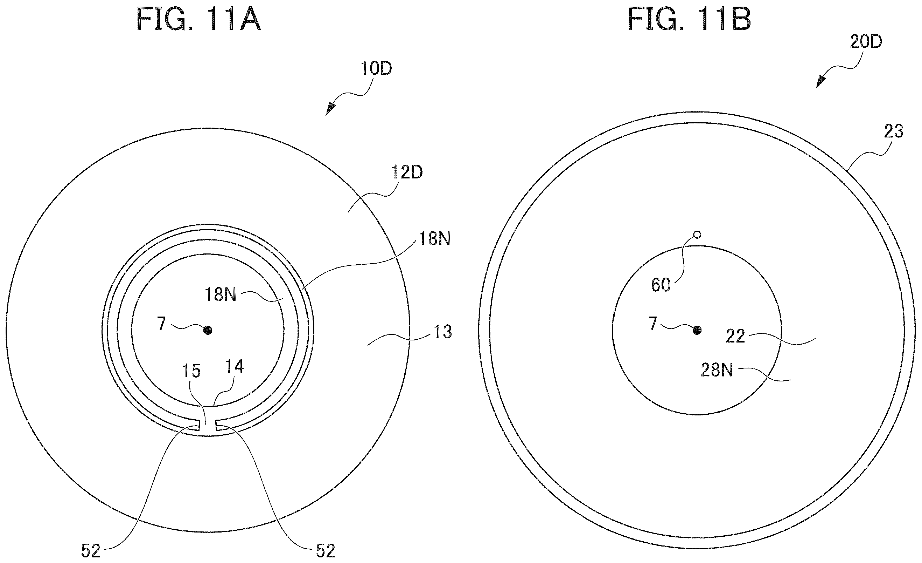

FIG. 10 is a schematic cross-sectional view showing a cross-section taken at the same line as line A-A in FIG. 3, of the rotary connector device according to the fourth embodiment. FIG. 11 is a schematic plan view showing the rotary member and a fixed member of the rotary connector device according to the fourth embodiment. FIG. 11(A) shows the rotary member. FIG. 11(B) shows the fixed member.

The rotary connector device 1D (1) according to the fourth embodiment includes the rotary member 10D (10), a fixed member 20D (20), and the flat cables 40. In the rotary connector device 1D, the rotary member 10D is assembled to be rotatable around the rotation axis line 7 of the rotary member 10D, relative to the fixed member 20D. More specifically, in FIG. 2, the rotary member 10D positioned above the fixed member 20D is assembled to be rotatable relative to the fixed member 20D, in collaboration with the sleeve 30 positioned beneath the fixed member 20D.

The rotary connector device 1D according to the fourth embodiment is almost the same as the rotary connector device 1A according to the first embodiment, except that the rotary member 10D is used in place of the rotary member 10A, while the fixed member 20D is used in place of the fixed member 20A. Further, similarly to the rotary member 10A, the rotary member 10D is provided so as to follow steering of a steering wheel (not shown). Similarly to the fixed member 20A, the fixed member 20D is fixed to a steering column (not shown).

Thus, in the following sections, in the rotary connector device 1D according to the fourth embodiment, some of the constituent elements that are the same as those in the rotary connector device 1A according to the first embodiment will be referred to by using the same reference characters, and explanations of the structure and actions will be omitted or simplified.

As shown in FIG. 2, FIG. 3, and FIG. 10, the rotary connector device 1D includes the flat cables 40 accommodated in the accommodating space 70 defined between the inner circumferential cylinder part 14 of the rotary member 10D and the outer circumferential cylinder part 23 of the fixed member 20D. The flat cables 40 are omitted from FIG. 10.

### (Rotary member)

As shown in FIG. 2, the rotary member 10D includes a ceiling plate part 12D (12) having an annular shape and the inner circumferential cylinder part 14 formed at an inner circumferential edge of the ceiling plate part 12D. Provided on the lower face 13 side of the ceiling plate part 12D is the bottom plate part 22 of the fixed member 20D.

As shown in FIG. 10 and FIG. 11(A), the rotary member 10D has the sliding surface 18N (18) that slides with respect to the fixed member 20D. More specifically, regarding the rotary member 10D, within the bottom face of the inner circumferential cylinder part 14, the bottom face 15 facing the bottom plate part 22 of the fixed member 20D and having an annular shape in a planar view serves as the sliding surface 18N. In other words, the sliding surface 18N is formed on the bottom face 15 of the inner circumferential cylinder part 14 that forms part of the rotary member 10D.

Because the material of the rotary member 10D is the same as the material of the rotary member 10A, explanations thereof will be omitted.

### (Fixed member)

As shown in FIG. 2, the fixed member 20D includes the bottom plate part 22 having an annular shape and being disposed to face and to be apart from the ceiling plate part 12D of the rotary member 10D; and the outer circumferential cylinder part 23 formed at the outer circumferential edge of the bottom plate part 22.

As shown in FIG. 10 and FIG. 11(B), the fixed member 20D has the sliding receiving surface 28N (28) facing the sliding surface 18N of the rotary member 10D. More specifically, the fixed member 20D has the sliding receiving surface 28N that slides with respect to the rotary member 10D. Even more specifically, regarding the fixed member 20D, within the bottom plate part 22, an annular portion facing the bottom face 15 of the inner circumferential cylinder part 14 of the rotary member 10D serves as the sliding receiving surface 28N. In other words, the sliding receiving surface 28N is formed on the upper face of the bottom plate part 22 that forms part of the fixed member 20D.

Because the material of the fixed member 20D is the same as the material of the fixed member 20A, explanations thereof will be omitted.

### (Accommodating space)

In the rotary connector device 1D, the accommodating space 70 is defined between the inner circumferential cylinder part 14 of the rotary member 10D and the outer circumferential cylinder part 23 of the fixed member 20D. More specifically, in the rotary connector device 1D, the accommodating space 70 is defined between the inner circumferential cylinder part 14 and the ceiling plate part 12D of the rotary member 10D and the outer circumferential cylinder part 23 and the bottom plate part 22 of the fixed member 20D.

### (Recessed part and projection part)

In the rotary connector device 1D shown in FIG. 10 and FIG. 11, the recessed part 50 is formed on the sliding surface 18N of the rotary member 10D, whereas the projection part 60 is provided on the sliding receiving surface 28N of the fixed member 20D.

More specifically, in the rotary connector device 1D, the recessed part 50 having a C-shape that extends along a circle centered on the rotation axis line 7 is formed on the sliding surface 18N of the rotary member 10D, while the projection part 60 is provided on the sliding receiving surface 28N of the fixed member 20D.

In the rotary connector device 1D, the recessed part 50 is formed on the sliding surface 18N provided on the bottom face 15 which has an annular shape in a planar view and is a certain portion of the bottom face of the inner circumferential cylinder part 14 of the rotary member 10D that faces the bottom plate part 22. Further, in the rotary connector device 1D, the projection part 60 is provided on the sliding receiving surface 28N provided on a surface of the bottom plate part 22 of the fixed member 20D.

In the rotary connector device 1D, the recessed part 50 formed on the sliding surface 18N of the rotary member 10D is formed as a groove that does not penetrate the member (the inner circumferential cylinder part 14) having the recessed part 50 formed. However, a modification example of the rotary connector device 1D may be a rotary connector device in which the recessed part 50 is a slit penetrating the member. Because the reason is the same as the reason for the modification example of the rotary connector device 1A, explanations thereof will be omitted.

For the same reason as with the rotary connector device 1A, it is desirable to connect the flat cables 40 of the rotary connector device 1D to a steering wheel adapted for the steer-by-wire type.

### (Actions)

In the rotary connector device 1D, when the rotary member 10D turns relative to the fixed member 20D, the projection part 60 provided on the sliding receiving surface 28N of the fixed member 20D moves within the recessed part 50 formed on the sliding surface 18N of the rotary member 10D. When the projection part 60 abuts against the stopper parts 52, 52, the rotatable range for the rotary member 10D to rotate relative to the fixed member 20D is regulated by the extending length of the recessed part 50 in which the projection part 60 is allowed to move. Accordingly, in the rotary connector device 1D, the rotary member 10D is regulated so as to have a rotation angle smaller than 360° with respect to the fixed member 20D. Consequently, the rotary connector device 1D is able to avoid the occurrence of excessive tightening and excessive loosening of the winding of the flat cables.

In the rotary connector device 1D, the center angle, which is the angle formed by the stopper parts 52, 52 of the recessed part 50 with respect to the center passed through by the rotation axis line 7, is smaller than 360°. With this configuration, the rotary connector device 1D makes it possible to achieve the neutral positioning without fail, by simply placing the rotary member 10D in a neutral position by appearance.

In the rotary connector device 1D, because the recessed part 50 formed on the sliding surface 18N of the rotary member 10D is a groove, unwanted substances do not easily intrude the accommodating space 70.

### (Advantageous effects)

The rotary connector device 1D makes it possible to provide a rotary connector device that facilitates recognizing the neutral position of the rotary member with respect to the fixed member without using a neutral mechanism and that is capable of avoiding the occurrence of excessive tightening and excessive loosening of the winding of the flat cables.

The rotary connector device 1D makes it possible to provide a rotary connector device in which unwanted substances do not easily intrude the accommodating space 70.

### <Fifth Embodiment>

A rotary connector device 1E (1) according to a fifth embodiment has an external appearance and a schematic interior shape that are the same as or similar to those of the rotary connector device 1A according to the first embodiment. Thus, in the following explanations of the rotary connector device 1E according to the fifth embodiment, FIG. 1 to FIG. 3 that were used for explaining the rotary connector device 1A according to the first embodiment will be conveniently used as appropriate. More specifically, the rotary connector device 1E according to the fifth embodiment will be explained by conveniently using the rotary connector device 1 shown in FIG. 1 to FIG. 3. Even more specifically, in the explanations of the present embodiment, the rotary connector device 1A, the rotary member 10A, and the like in FIG. 1 to FIG. 3 will be referred to as the rotary connector device 1E, a rotary member 10E, and the like, as appropriate.

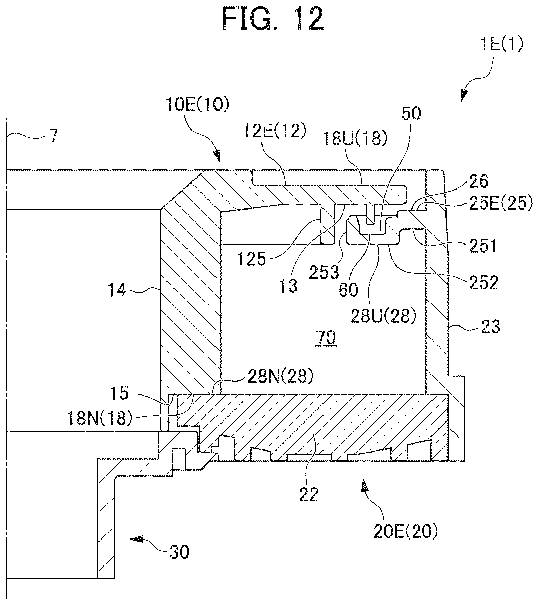

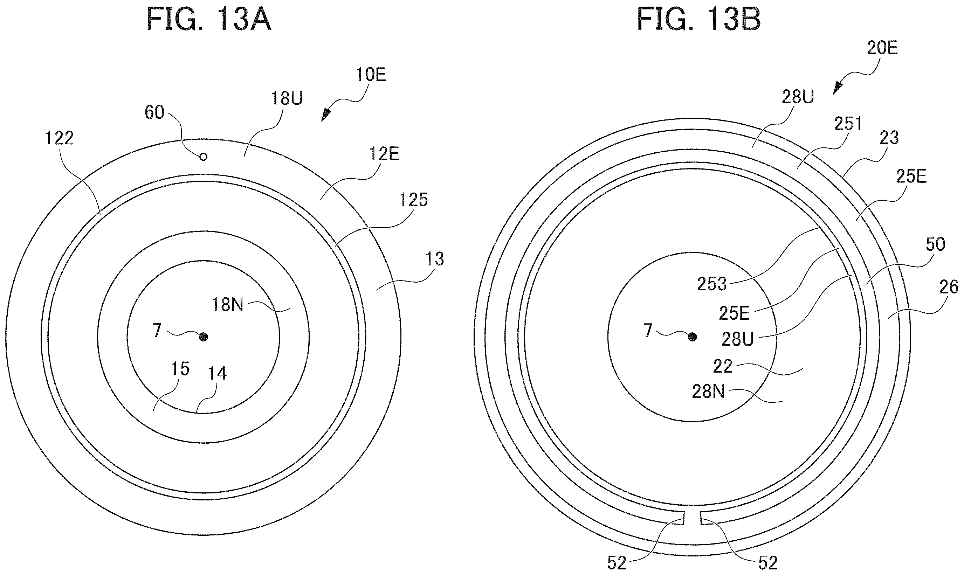

FIG. 12 is a schematic cross-sectional view showing a cross-section taken at the same line as line A-A in FIG. 3, of the rotary connector device according to the fifth embodiment. FIG. 13 is a schematic plan view showing the rotary member and a fixed member of the rotary connector device according to the fifth embodiment. FIG. 13(A) shows the rotary member. FIG. 13(B) shows the fixed member.

The rotary connector device 1E (1) according to the fifth embodiment includes the rotary member 10E (10), a fixed member 20E (20), and the flat cables 40. In the rotary connector device 1E, the rotary member 10E is assembled to be rotatable around the rotation axis line 7 of the rotary member 10E, relative to the fixed member 20E. More specifically, in FIG. 2, the rotary member 10E positioned above the fixed member 20E is assembled to be rotatable relative to the fixed member 20E, in collaboration with the sleeve 30 positioned beneath the fixed member 20E.

The rotary connector device 1E according to the fifth embodiment is almost the same as the rotary connector device 1A according to the first embodiment, except that the rotary member 10E is used in place of the rotary member 10A, while the fixed member 20E is used in place of the fixed member 20A. Further, similarly to the rotary member 10A, the rotary member 10E is provided so as to follow steering of a steering wheel (not shown). Similarly to the fixed member 20A, the fixed member 20E is fixed to a steering column (not shown).

Thus, in the following sections, in the rotary connector device 1E according to the fifth embodiment, some of the constituent elements that are the same as those in the rotary connector device 1A according to the first embodiment will be referred to by using the same reference characters, and explanations of the structure and actions will be omitted or simplified.

As shown in FIG. 2, FIG. 3, and FIG. 12, the rotary connector device 1E includes the flat cables 40 accommodated in the accommodating space 70 defined between the inner circumferential cylinder part 14 of the rotary member 10E and the outer circumferential cylinder part 23 of the fixed member 20E. The flat cables 40 are omitted from FIG. 12.

### (Rotary member)

As shown in FIG. 2, the rotary member 10E includes a ceiling plate part 12E (12) having an annular shape and the inner circumferential cylinder part 14 formed at an inner circumferential edge of the ceiling plate part 12E.

Further, as shown in FIG. 12 and FIG. 13, the ceiling plate part 12E includes: the ceiling flat plate part 121 having an annular and flat-plate-like shape; and a ceiling hanging part 125 constituted of a wall face hanging in the manner of a tube centered on the rotation axis line 7, from the ceiling flat plate part 121 toward the fixed member 20E. Provided on the lower face 13 side of the ceiling plate part 12E is the bottom plate part 22 of the fixed member 20B.

As shown in FIG. 12 and FIG. 13(A), the rotary member 10E has 18U (18) that slides with respect to the fixed member 20E. More specifically, regarding the rotary member 10E, within the ceiling plate part 12E, the lower face 13 which is the portion on the outer circumferential side with respect to the ceiling hanging part 125 serves as the sliding surface 18U. In other words, the sliding surface 18U is formed on the lower face 13 which is an outer circumferential portion of the ceiling plate part 12E forming part of the rotary member 10E.

Because the material of the rotary member 10E is the same as the material of the rotary member 10A, explanations thereof will be omitted.

### (Fixed member)

As shown in FIG. 2, the fixed member 20E includes the bottom plate part 22 having an annular shape and being disposed to face and to be apart from the ceiling plate part 12E of the rotary member 10E; and the outer circumferential cylinder part 23 formed at the outer circumferential edge of the bottom plate part 22.

As shown in FIG. 12 and FIG. 13(B), the fixed member 20E further includes an annular supporting part 25E (25) formed so as to annularly extend inward from the inner face of the upper portion of the outer circumferential cylinder part 23 and to face the lower face 13 which is the outer circumferential portion of the ceiling plate part 12E of the rotary member 10E. The annular supporting part 25E includes: an annular support flat plate part 251; an annular support groove frame part 252 provided on the inner circumference of the annular support flat plate part 251 and forming the recessed part 50 on the rotary member 10E side; and an annular support inner circumferential part 253 constituting an inner circumferential face of the annular support groove frame part 252.

As shown in FIG. 12 and FIG. 13(B), the fixed member 20E has the sliding receiving surface 28U (28) facing the sliding surface 18U of the rotary member 10E. More specifically, the fixed member 20E has the sliding receiving surface 28U that slides with respect to the rotary member 10E. Even more specifically, regarding the fixed member 20E, the annular supporting part 25E serves as the sliding receiving surface 28U. In other words, the sliding receiving surface 28U is formed on the upper face 26 of the annular supporting part 25E of the outer circumferential cylinder part 23 that forms part of the fixed member 20E.

Because the material of the fixed member 20E is the same as the material of the fixed member 20A, explanations thereof will be omitted.

### (Accommodating space)

In the rotary connector device 1E, the accommodating space 70 is defined between the inner circumferential cylinder part 14 of the rotary member 10E and the outer circumferential cylinder part 23 of the fixed member 20E. More specifically, in the rotary connector device 1E, the accommodating space 70 is defined between the inner circumferential cylinder part 14 and the ceiling plate part 12E of the rotary member 10E and the outer circumferential cylinder part 23 and the bottom plate part 22 of the fixed member 20E.

### (Recessed part and projection part)

In the rotary connector device 1E shown in FIG. 12 and FIG. 13, the recessed part 50 is formed on the sliding receiving surface 28U of the fixed member 20E, whereas the projection part 60 is provided on the sliding surface 18U of the rotary member 10E.

More specifically, in the rotary connector device 1E, the recessed part 50 having a C-shape that extends along a circle centered on the rotation axis line 7 is formed on the sliding receiving surface 28U of the fixed member 20E, while the projection part 60 is provided on the sliding surface 18U of the rotary member 10E.

In other words, in the rotary connector device 1E, the recessed part 50 is formed on the sliding receiving surface 28U provided on the upper face 26 which is one of the surfaces of the annular supporting part 25E of the fixed member 20E that faces the ceiling plate part 12E. Further, in the rotary connector device 1E, the projection part 60 is provided on the sliding surface 18U provided on the lower face 13 which is one of the surfaces of the ceiling plate part 12E of the rotary member 10E that faces the annular supporting part 25E.

In the rotary connector device 1E, the recessed part 50 formed on the sliding receiving surface 28U of the fixed member 20E is formed as a groove that does not penetrate the member (the annular supporting part 25E) having the recessed part 50 formed. However, a modification example of the rotary connector device 1E may be a rotary connector device in which the recessed part 50 is a slit penetrating the member. Because the reason is the same as the reason for the modification example of the rotary connector device 1A, explanations thereof will be omitted.

For the same reason as with the rotary connector device 1A, it is desirable to connect the flat cables 40 of the rotary connector device 1E to a steering wheel adapted for the steer-by-wire type.

### (Actions)

In the rotary connector device 1E, when the rotary member 10E turns relative to the fixed member 20E, the projection part 60 provided on the sliding surface 18U of the rotary member 10E moves within the recessed part 50 formed on the sliding receiving surface 28U of the fixed member 20E. When the projection part 60 abuts against the stopper parts 52, 52, the rotatable range for the rotary member 10E to rotate relative to the fixed member 20E is regulated by the extending length of the recessed part 50 in which the projection part 60 is allowed to move. Accordingly, in the rotary connector device 1E, the rotary member 10E is regulated so as to have a rotation angle smaller than 360° with respect to the fixed member 20E. Consequently, the rotary connector device 1E is able to avoid the occurrence of excessive tightening and excessive loosening of the winding of the flat cables.

In the rotary connector device 1E, the center angle, which is the angle formed by the stopper parts 52, 52 of the recessed part 50 with respect to the center passed through by the rotation axis line 7, is smaller than 360°. With this configuration, the rotary connector device 1E makes it possible to achieve the neutral positioning without fail, by simply placing the rotary member 10E in a neutral position by appearance.

In the rotary connector device 1E, because the recessed part 50 formed on the sliding receiving surface 28U of the fixed member 20E is a groove, unwanted substances do not easily intrude the accommodating space 70.

### (Advantageous effects)

The rotary connector device 1E makes it possible to provide a rotary connector device that facilitates recognizing the neutral position of the rotary member with respect to the fixed member without using a neutral mechanism and that is capable of avoiding the occurrence of excessive tightening and excessive loosening of the winding of the flat cables.

The rotary connector device 1E makes it possible to provide a rotary connector device in which unwanted substances do not easily intrude the accommodating space 70.

### <Sixth Embodiment>

A rotary connector device 1F (1) according to a sixth embodiment has an external appearance and a schematic interior shape that are the same as or similar to those of the rotary connector device 1A according to the first embodiment. Thus, in the following explanations of the rotary connector device 1F according to the sixth embodiment, FIG. 1 to FIG. 3 that were used for explaining the rotary connector device 1A according to the first embodiment will be conveniently used as appropriate. More specifically, the rotary connector device 1F according to the sixth embodiment will be explained by conveniently using the rotary connector device 1 shown in FIG. 1 to FIG. 3. Even more specifically, in the explanations of the present embodiment, the rotary connector device 1A, the rotary member 10A, and the like in FIG. 1 to FIG. 3 will be referred to as the rotary connector device 1F, a rotary member 10F, and the like, as appropriate.

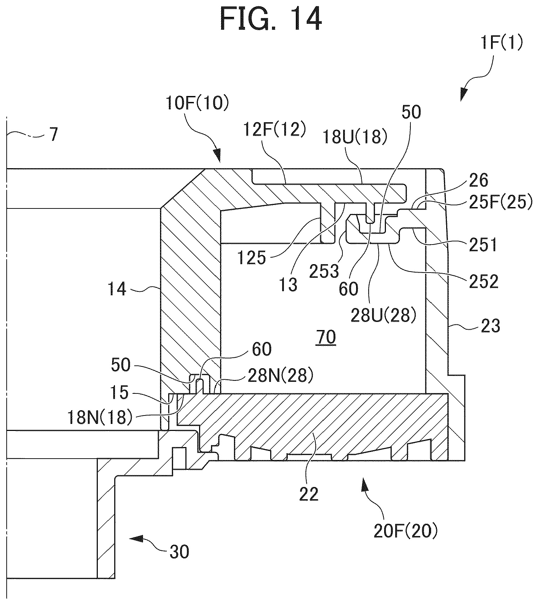

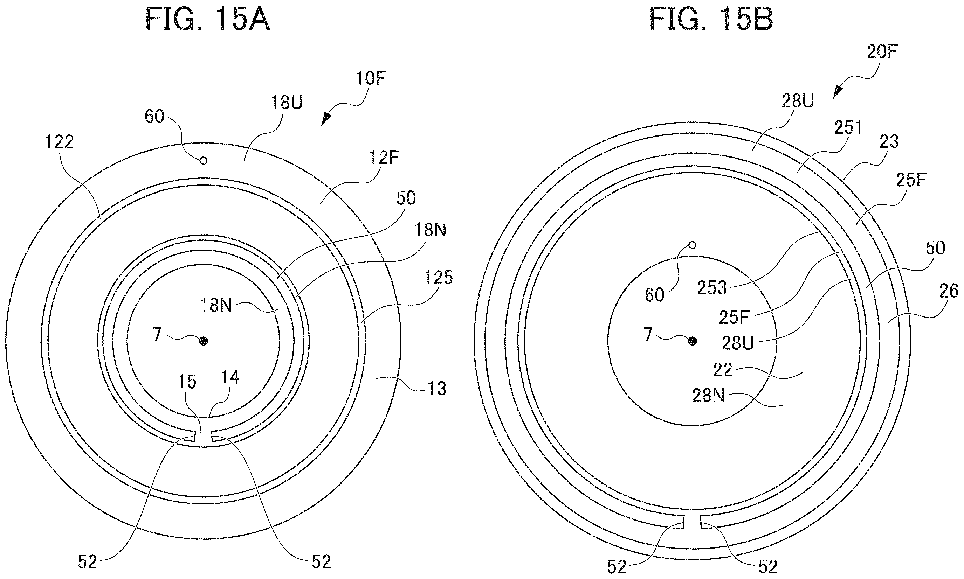

FIG. 14 is a schematic cross-sectional view showing a cross-section taken at the same line as line A-A in FIG. 3, of the rotary connector device according to the sixth embodiment. FIG. 15 is a schematic plan view showing the rotary member and a fixed member of the rotary connector device according to the sixth embodiment. FIG. 15(A) shows the rotary member. FIG. 15(B) shows the fixed member.

The rotary connector device 1F (1) according to the sixth embodiment includes the rotary member 10F (10), a fixed member 20F (20), and the flat cables 40. In the rotary connector device 1F, the rotary member 10F is assembled to be rotatable around the rotation axis line 7 of the rotary member 10F, relative to the fixed member 20F. More specifically, in FIG. 2, the rotary member 10F positioned above the fixed member 20F is assembled to be rotatable relative to the fixed member 20F, in collaboration with the sleeve 30 positioned beneath the fixed member 20F.

The rotary connector device 1F according to the sixth embodiment is almost the same as the rotary connector device 1A according to the first embodiment, except that the rotary member 10F is used in place of the rotary member 10A, while the fixed member 20F is used in place of the fixed member 20A. Further, similarly to the rotary member 10A, the rotary member 10F is provided so as to follow steering of a steering wheel (not shown). Similarly to the fixed member 20A, the fixed member 20F is fixed to a steering column (not shown).

Thus, in the following sections, in the rotary connector device 1F according to the sixth embodiment, some of the constituent elements that are the same as those in the rotary connector device 1A according to the first embodiment will be referred to by using the same reference characters, and explanations of the structure and actions will be omitted or simplified.

As shown in FIG. 2, FIG. 3, and FIG. 14, the rotary connector device 1F includes the flat cables 40 accommodated in the accommodating space 70 defined between the inner circumferential cylinder part 14 of the rotary member 10F and the outer circumferential cylinder part 23 of the fixed member 20F. The flat cables 40 are omitted from FIG. 14.

### (Rotary member)

As shown in FIG. 2, the rotary member 10F includes a ceiling plate part 12F (12) having an annular shape and the inner circumferential cylinder part 14 formed at an inner circumferential edge of the ceiling plate part 12F.

Further, as shown in FIG. 14 and FIG. 15, the ceiling plate part 12F includes: the ceiling flat plate part 121 having an annular and flat-plate-like shape; and the ceiling hanging part 125 constituted of the wall face hanging in the manner of a tube centered on the rotation axis line 7, from the ceiling flat plate part 121 toward the fixed member 20F.

As shown in FIG. 14 and FIG. 15(A), the rotary member 10F has the sliding surfaces 18N (18) and 18U (18) that slide with respect to the fixed member 20F. More specifically, regarding the rotary member 10F, within the bottom face of the inner circumferential cylinder part 14, the bottom face 15 facing the bottom plate part 22 of the fixed member 20F and having an annular shape in a planar view serves as the sliding surface 18N. In other words, the sliding surface 18N is formed on the bottom face 15 of the inner circumferential cylinder part 14 that forms part of the rotary member 10F. Further, regarding the rotary member 10F, of the surfaces of the ceiling plate part 12F, the lower face 13 facing an annular supporting part 25F (25) of the fixed member 20F serves as the sliding surface 18U. In other words, the sliding surface 18U is formed on the lower face 13 which is an outer circumferential portion of the ceiling plate part 12F that forms part of the rotary member 10F. The sliding surface 18U of the rotary member 10F is a region including the ceiling groove frame part 122.

Because the material of the rotary member 10F is the same as the material of the rotary member 10A, explanations thereof will be omitted.

### (Fixed member)

As shown in FIG. 2, the fixed member 20F includes the bottom plate part 22 having an annular shape and being disposed to face and to be apart from the ceiling plate part 12F of the rotary member 10F; and the outer circumferential cylinder part 23 formed at the outer circumferential edge of the bottom plate part 22.

Also, as shown in FIG. 14 and FIG. 15(B), the fixed member 20F further includes the annular supporting part 25F (25) formed so as to annularly extend inward from the inner face of the upper portion of the outer circumferential cylinder part 23 and to face the lower face 13 which is the outer circumferential portion of the ceiling plate part 12F of the rotary member 10F. The annular supporting part 25F includes: the annular support flat plate part 251; the annular support groove frame part 252 provided on the inner circumference of the annular support flat plate part 251 and forming the recessed part 50 on the rotary member 10F side; and the annular support inner circumferential part 253 constituting the inner circumferential face of the annular support groove frame part 252.

As shown in FIG. 14 and FIG. 15(B), the fixed member 20F has the sliding receiving surfaces 28N (28) and 28U (28) that respectively face the sliding surfaces 18N and 18U of the rotary member 10F. More specifically, the fixed member 20F has the sliding receiving surfaces 28N and 28U that slide with respect to the rotary member 10F. Even more specifically, regarding the fixed member 20F, within the bottom plate part 22, an annular portion facing the bottom face 15 of the inner circumferential cylinder part 14 of the rotary member 10F serves as the sliding receiving surface 28N. In other words, the sliding receiving surface 28N is formed on the upper face of the bottom plate part 22 that forms part of the fixed member 20F. Further, as for the annular supporting part 25F, of the surfaces of the annular supporting part 25F, the upper face 26 facing the ceiling plate part 12F serves as the sliding receiving surface 28U (28). In other words, the sliding receiving surface 28U is formed on the upper face 26 of the annular supporting part 25B of the outer circumferential cylinder part 23 that forms part of the fixed member 20F.

Because the material of the fixed member 20F is the same as the material of the fixed member 20A, explanations thereof will be omitted.

### (Accommodating space)

In the rotary connector device 1F, the accommodating space 70 is defined between the inner circumferential cylinder part 14 of the rotary member 10F and the outer circumferential cylinder part 23 of the fixed member 20F. More specifically, in the rotary connector device 1F, the accommodating space 70 is defined between the inner circumferential cylinder part 14 and the ceiling plate part 12F of the rotary member 10F and the outer circumferential cylinder part 23 and the bottom plate part 22 of the fixed member 20F.

### (Recessed part and projection part)

In the rotary connector device 1F shown in FIG. 14 and FIG. 15, the recessed parts 50 are formed on the sliding receiving surface 28U of the fixed member 20F and on the sliding surface 18N of the rotary member 10F, whereas the projection parts 60 are provided on the sliding surface 18U of the rotary member 10F and on the sliding receiving surface 28N of the fixed member 20F.

More specifically, in the rotary connector device 1F, the recessed parts 50 each having an F-shape that extends along a circle centered on the rotation axis line 7 are formed on the sliding surface 18N of the rotary member 10F and on the sliding receiving surface 28U of the fixed member 20F. In addition, in the rotary connector device 1F, the projection parts 60 are provided on the sliding receiving surface 28N of the fixed member 20F and on the sliding surface 18U of the rotary member 10F.

In other words, in the rotary connector device 1F, the recessed parts 50 are formed on the sliding surface 18N provided on the bottom face 15 which has an annular shape in a planar view and is a certain portion of the bottom face of the inner circumferential cylinder part 14 of the rotary member 10F that faces the bottom plate part 22 and on the sliding receiving surface 28U provided on the upper face 26 which is one of the surfaces of the annular supporting part 25F of the fixed member 20F that faces the ceiling plate part 12F. Further, in the rotary connector device 1F, the projection parts 60 are provided on the sliding receiving surface 28N provided on a surface of the bottom plate part 22 of the fixed member 20F and on the sliding surface 18U provided on the lower face 13 which is one of the surfaces of the ceiling plate part 12F of the rotary member 10F that faces the annular supporting part 25F of the fixed member 20F.

In the rotary connector device 1F, the projection part 60 provided on the sliding receiving surface 28N of the fixed member 20F moves within the recessed part 50 formed on the sliding surface 18N of the rotary member 10F, while the projection part 60 provided on the sliding surface 18U of the rotary member 10F moves within the recessed part 50 formed on the sliding receiving surface 28U of the fixed member 20F.

In the rotary connector device 1F, the recessed parts 50 formed on the sliding surface 18N of the rotary member 10F and on the sliding receiving surface 28U of the fixed member 20F are formed as grooves that do not penetrate the members (the inner circumferential cylinder part 14 and the annular supporting part 25F) having the recessed parts 50 formed. However, a modification example of the rotary connector device 1F may be a rotary connector device in which the recessed parts 50 are slits penetrating the members. Because the reason is the same as the reason for the modification example of the rotary connector device 1A, explanations thereof will be omitted.

For the same reason as with the rotary connector device 1A, it is desirable to connect the flat cables 40 of the rotary connector device 1F to a steering wheel adapted for the steer-by-wire type.

### (Actions)

In the rotary connector device 1F, when the rotary member 10F turns relative to the fixed member 20F, the projection parts 60 provided on the sliding receiving surface 28N of the fixed member 20F and on the sliding surface 18U of the rotary member 10F move within the recessed parts 50 formed on the sliding surface 18N of the rotary member 10F and on the sliding receiving surface 28U of the fixed member 20F. Further, when the projection parts 60 abut against the stopper parts 52, 52, the rotatable range for the rotary member 10F to rotate relative to the fixed member 20F is regulated by the extending lengths of the recessed parts 50 in which the projection parts 60 is allowed to move. Accordingly, in the rotary connector device 1F, the rotary member 10F is regulated so as to have a rotation angle smaller than 360° with respect to the fixed member 20F. Consequently, the rotary connector device 1F is able to avoid the occurrence of excessive tightening and excessive loosening of the winding of the flat cables.

In the rotary connector device 1F, the center angle, which is the angle formed by the stopper parts 52, 52 of the recessed parts 50 with respect to the center passed through by the rotation axis line 7, is smaller than 360°. With this configuration, the rotary connector device 1F makes it possible to achieve the neutral positioning without fail, by simply placing the rotary member 10F in a neutral position by appearance.

In the rotary connector device 1F, because the recessed parts 50 formed on the sliding receiving surface 28U of the fixed member 20F and on the sliding surface 18N of the rotary member 10F are grooves, unwanted substances do not easily intrude the accommodating space 70.

### (Advantageous effects)

The rotary connector device 1F makes it possible to provide a rotary connector device that facilitates recognizing the neutral position of the rotary member with respect to the fixed member without using a neutral mechanism and that is capable of avoiding the occurrence of excessive tightening and excessive loosening of the winding of the flat cables.

The rotary connector device 1F makes it possible to provide a rotary connector device in which unwanted substances do not easily intrude the accommodating space 70.

### <Modification Examples of First to Sixth Embodiments>

Regarding the rotary connector devices 1A to 1F according to the first to the sixth embodiments, the examples were explained in which at least one recessed part 50 is formed and at least one projection part 60 is provided, as shown in FIG. 4 to FIG. 15. However, the rotary connector device 1 of the present invention is not limited to the rotary connector devices 1A to 1F according to the first to the sixth embodiments, as long as at least one recessed part 50 is formed on one selected from between the sliding surface 18 and the sliding receiving surface 28, while at least one projection part 60 is provided on the other of the sliding surface 18 and the sliding receiving surface 28.

For example, in the rotary connector device 1C according to the third embodiment, the recessed parts 50 are formed on the sliding receiving surface 28N of the fixed member 20C and on the sliding surface 18U of the rotary member 10C, while the projection parts 60 are provided on the sliding surface 18N of the rotary member 10C and on the sliding receiving surface 28U of the fixed member 20C. In contrast, in a rotary connector device 1 according to a modification example of the third embodiment, for example, the recessed parts 50 may be formed on the sliding receiving surfaces 28N and 28U of the fixed member 20C, while the projection parts 60 are provided on the sliding surfaces 18N and 18U of the rotary member 10C.

Because actions and advantageous effects of modification examples of the first to the sixth embodiments are represented by a sum of the actions and the advantageous effects of the first to the sixth embodiments, explanations thereof will be omitted.

As shown in FIG. 3, in the rotary connector devices 1A to 1F according to the first to the sixth embodiments, the accommodating space 70 is an annular space having a rectangular cross-section. However, in the rotary connector device 1 of the present invention, the accommodating space 70 may have a shape other than that of the annular space having a rectangular cross-section. For example, by eliminating a portion of the annular space in the circumferential direction, it is possible to obtain a C-shaped space having a rectangular cross-section and having a C-shape in a planar view. The following will explain an example of the rotary connector device 1 in which the accommodating space 70 is a C-shaped space.

### <Seventh Embodiment>

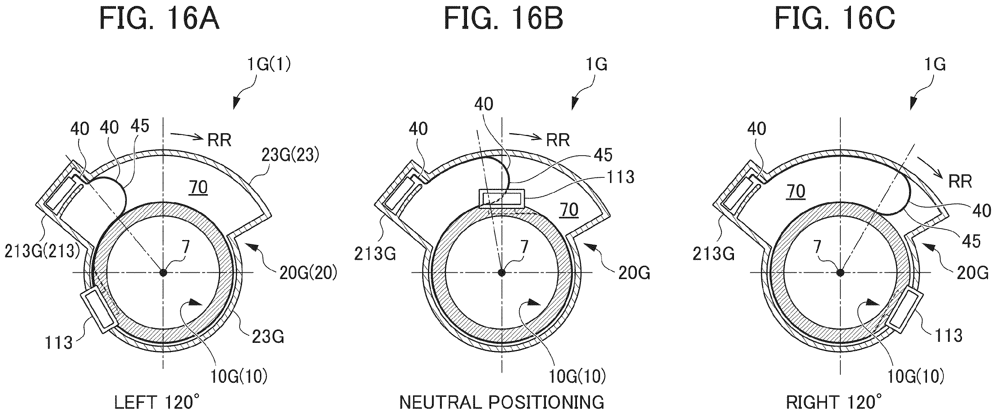

FIG. 16 is a schematic cross-sectional view showing a rotary connector device according to a seventh embodiment. FIG. 16(A) shows the rotary connector device in a 120° positioning in a winding loosening direction. FIG. 16(B) shows the rotary connector device in a neutral positioning. FIG. 16(C) shows the rotary connector device in a 120° positioning in a winding tightening direction. In this situation, the "120° positioning in the winding loosening direction" denotes the positioning achieved by turning, in the winding loosening direction, the rotary member 10 of the rotary connector device 1 by 120° from the neutral positioning. The "120° positioning in the winding tightening direction" denotes the positioning achieved by turning, in the winding tightening direction, the rotary member 10 of the rotary connector device 1 by 120° from the neutral positioning.

A rotary connector device 1G (1) according to the seventh embodiment shown in FIG. 16 includes a rotary member 10G (10), a fixed member 20G (20), and one flat cable 40.

Similarly to the rotary members 10A to 10F of the rotary connector devices 1A to 1F according to the first to the sixth embodiments, the rotary member 10G of the rotary connector device 1G according to the seventh embodiment shown in FIG. 16 has an annular shape including the inner circumferential cylinder part 14.

In contrast, the fixed member 20G of the rotary connector device 1G according to the seventh embodiment has a shape different from the annular shape including the outer circumferential cylinder part 23 of the fixed members 20A to 20F of the rotary connector devices 1A to 1F according to the first to the sixth embodiments. As shown in FIG. 16, the fixed member 20G has a C-shape-attached circular columnar shape including: a circular columnar space accommodating therein the rotary member 10G assembled to be rotatable relative to the fixed member 20G; and an outer circumferential cylinder part 23G (23) that is provided on the outer circumference of the inner circumferential cylinder part 14 of the rotary member 10G and that defines, with the inner circumferential cylinder part 1, the accommodating space 70 having a C-shape in a planar view. The shape of the entire rotary connector device 1G is a C-shape-attached circular columnar shape similar to that of the fixed member 20G.

The rotary connector device 1G according to the seventh embodiment is almost the same as the rotary connector device 1A according to the first embodiment, except that the rotary member 10G is used in place of the rotary member 10A, whereas the fixed member 20G is used in place of the fixed member 20A, while the single flat cable 40 is used. Similarly to the rotary member 10A, the rotary member 10G is provided so as to follow steering of a steering wheel (not shown). Similarly to the fixed member 20A, the fixed member 20G is fixed to a steering column (not shown).

The rotary member 10G is substantially the same as the rotary member 10A. In other words, similarly to the rotary member 10A, the rotary member 10G includes a ceiling plate part 12G (12) having an annular shape and the inner circumferential cylinder part 14 formed at an inner circumferential edge of the ceiling plate part 12G. Similarly to the rotary member 10A of the rotary connector device 1A according to the first embodiment, the rotary member 10G has the sliding surface 18N (18) that slides with respect to the fixed member 20G.

Further, the fixed member 20G is almost the same as the fixed member 20A, except for the shape of the outer circumferential cylinder part 23G. In other words, similarly to the fixed member 20A, the fixed member 20G includes the bottom plate part 22 having an annular shape and being disposed to face and to be apart from the ceiling plate part 12G of the rotary member 10G; and the outer circumferential cylinder part 23G formed at the outer circumferential edge of the bottom plate part 22. Similarly to the fixed member 20A of the rotary connector device 1A according to the first embodiment, the fixed member 20G has the sliding receiving surface 28N (28) facing the sliding surface 18N of the rotary member 10G.

Thus, in the following sections, in the rotary connector device 1G according to the seventh embodiment, some of the constituent elements that are the same as those in the rotary connector device 1A according to the first embodiment will be referred to by using the same reference characters, and explanations of the structure and actions will be omitted or simplified.

### (Fixed member)

The outer circumferential cylinder part 23G of the fixed member 20G is shaped to form the accommodating space 70 of the rotary connector device 1G according to the seventh embodiment which has a C-shape in a planar view and of which the length in the circumferential direction is shorter than that of the accommodating space 70 having the annular shape in the rotary connector device 1A according to the first embodiment.

### (Recessed part and projection part)

Although not shown, similarly to the rotary member 10A and the fixed member 20A of the rotary connector device 1A according to the first embodiment, regarding the rotary member 10G and the fixed member 20G of the rotary connector device 1G, the recessed part 50 having a C-shape that extends along a circle centered on the rotation axis line 7 is formed on the sliding receiving surface 28N of the fixed member 20G, while the projection part 60 is provided on the sliding surface 18N of the rotary member 10G.

With this configuration, in the rotary connector device 1G of the present invention, when the rotary member 10G turns relative to the fixed member 20G, the projection part 60 provided on the sliding surface 18N of the rotary member 10G moves within the recessed part 50 formed on the sliding receiving surface 28N of the fixed member 20G. When the projection part 60 abuts against the stopper parts 52, 52, the rotatable range for the rotary member 10G to rotate relative to the fixed member 20G is regulated by the extending length of the recessed part 50 in which the projection part 60 is allowed to move. Accordingly, in the rotary connector device 1G, the rotary member 10G is regulated so as to have a rotation angle smaller than 360° with respect to the fixed member 20G.

### (Actions)

In the rotary connector device 1G, when the rotary member 10G turns relative to the fixed member 20G, the projection part 60 provided on the sliding surface 18N of the rotary member 10G moves within the recessed part 50 formed on the sliding receiving surface 28N of the fixed member 20G. When the projection part 60 abuts against the stopper parts 52, 52, the rotatable range for the rotary member 10G to rotate relative to the fixed member 20G is regulated by the extending length of the recessed part 50 in which the projection part 60 is allowed to move. Accordingly, in the rotary connector device 1G, the rotary member 10G is regulated so as to have a rotation angle smaller than 360° with respect to the fixed member 20G. Consequently, the rotary connector device 1G is able to avoid the occurrence of excessive tightening and excessive loosening of the winding of the flat cable.

An action to avoid the occurrence of excessive tightening and excessive loosening of the winding of the flat cable can be explained as follows.

In the rotary connector device 1G, from the 120° positioning in the winding loosening direction shown in FIG. 16(A), when the rotary member 10G is turned by 120° in an RR direction, the neutral positioning shown in FIG. 16(B) is achieved. From the neutral positioning shown in FIG. 16(B), when the rotary member 10G is turned by 120° in the RR direction, the 120° positioning in the winding loosening direction shown in FIG. 16(C) is achieved.

For example, to address the situation where excessive tightening would be caused in the winding of the flat cable 40 when the rotary connector device 1G attempts to further turn the rotary member 10G in the RR direction from the 120° positioning in the winding loosening direction shown in FIG. 16(C), the recessed part 50 is formed to prevent the rotary member 10G from further turning in the RR direction. By forming the recessed part 50 in this manner, it is possible to avoid the occurrence of the excessive tightening of the winding of the flat cable 40.

In the rotary connector device 1G, from the 120° positioning in the winding loosening direction shown in FIG. 16(C), when the rotary member 10G is turned by 120° in the direction opposite from the RR direction, the neutral positioning shown in FIG. 16(B) is achieved. From the neutral positioning shown in FIG. 16(B), when the rotary member 10G is turned by 120° in the direction opposite from the RR direction, the 120° positioning in the winding loosening direction shown in FIG. 16(A) is achieved.

For example, to address the situation where excessive loosening would be caused in the winding of the flat cable 40 when the rotary connector device 1G attempts to further turn the rotary member 10G in the direction opposite from RR direction, from the 120° positioning in the winding loosening direction shown in FIG. 16(A), the recessed part 50 is formed to prevent the rotary member 10G from further turning in the direction opposite from the RR direction. By forming the recessed part 50 in this manner, it is possible to avoid the occurrence of the excessive loosening of the winding of the flat cable 40.

In the rotary connector device 1G, the center angle, which is the angle formed by the stopper parts 52, 52 of the recessed part 50 with respect to the center passed through by the rotation axis line 7, is smaller than 360°. With this configuration, the rotary connector device 1G makes it possible to achieve the neutral positioning without fail, by simply placing the rotary member 10G in a neutral position by appearance.

In the rotary connector device 1G, because the recessed part 50 formed on the sliding receiving surface 28N of the fixed member 20G is a groove, unwanted substances do not easily intrude the accommodating space 70.

The shape of the entire rotary connector device 1G is a C-shape-attached circular columnar shape similar to that of the fixed member 20G. Thus, it is possible to make the rotary connector device 1G compact.

### (Advantageous effects)

The rotary connector device 1G makes it possible to provide a rotary connector device that facilitates recognizing the neutral position of the rotary member with respect to the fixed member without using a neutral mechanism and that is capable of avoiding the occurrence of excessive tightening and excessive loosening of the winding of the flat cable.

The rotary connector device 1G makes it possible to provide a rotary connector device in which unwanted substances do not easily intrude the accommodating space 70.

The rotary connector device 1G makes it possible to provide a compact rotary connector device.

### <Eighth to Tenth Embodiments>

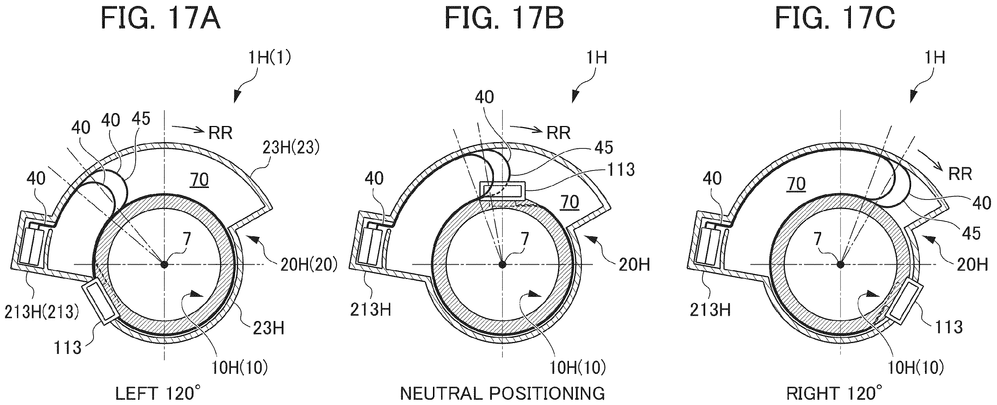

FIG. 17 is a schematic cross-sectional view showing a rotary connector device according to an eighth embodiment. FIG. 17(A) shows the rotary connector device in a 120° positioning in the winding loosening direction. FIG. 17(B) shows the rotary connector device in a neutral positioning. FIG. 17(C) shows the rotary connector device in a 120° positioning in the winding tightening direction.

A rotary connector device 1H (1) according to the eighth embodiment shown in FIG. 17 includes a rotary member 10H (10), a fixed member 20H (20), and two flat cables 40. The rotary connector device 1H according to the eighth embodiment shown in FIG. 17 is almost the same as the rotary connector device 1G according to the seventh embodiment shown in FIG. 16, except that the rotary member 10H is used in place of the rotary member 10G, whereas the fixed member 20H is used in place of the fixed member 20G, while the two flat cables 40 are used.

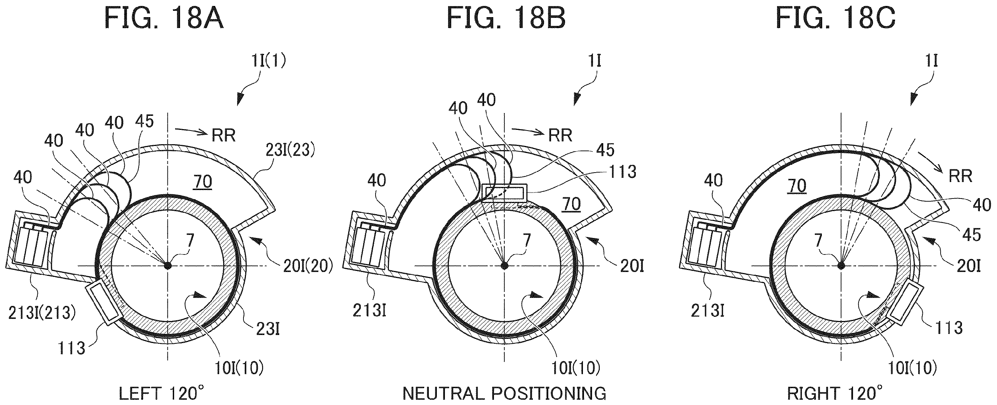

FIG. 18 is a schematic cross-sectional view showing a rotary connector device according to a ninth embodiment. FIG. 18(A) shows the rotary connector device in a 120° positioning in the winding loosening direction. FIG. 18(B) shows the rotary connector device in a neutral positioning. FIG. 18(C) shows the rotary connector device in a 120° positioning in the winding tightening direction.

A rotary connector device 1I (1) according to the ninth embodiment shown in FIG. 18 includes a rotary member 10I (10), a fixed member 20I (20), and three flat cables 40. The rotary connector device 1I according to the ninth embodiment shown in FIG. 18 is almost the same as the rotary connector device 1G according to the seventh embodiment shown in FIG. 16, except that the rotary member 10I is used in place of the rotary member 10G, whereas the fixed member 20I is used in place of the fixed member 20G, while the three flat cables 40 are used.

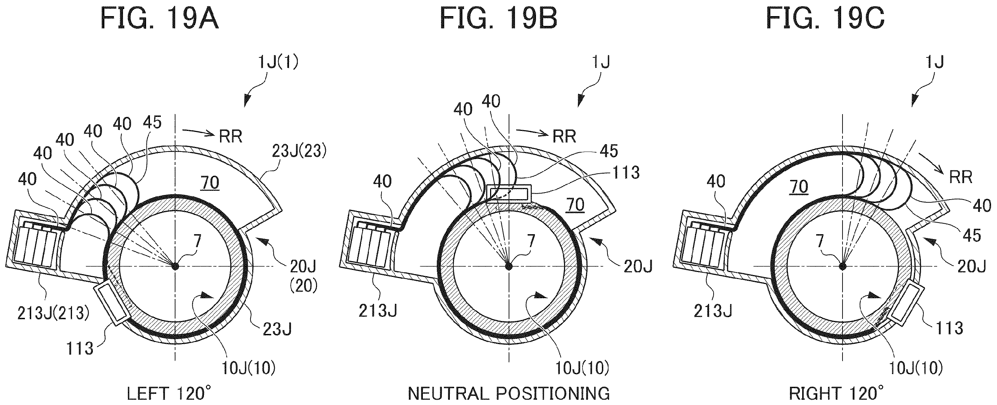

FIG. 19 is a schematic cross-sectional view showing a rotary connector device according to a tenth embodiment. FIG. 19(A) shows the rotary connector device in a 120° positioning in the winding loosening direction. FIG. 19(B) shows the rotary connector device in a neutral positioning. FIG. 19(C) shows the rotary connector device in a 120° positioning in the winding tightening direction.

A rotary connector device 1J (1) according to the tenth embodiment shown in FIG. 19 includes a rotary member 10J (10), a fixed member 20J (20), and four flat cables 40. The rotary connector device 1J according to the tenth embodiment shown in FIG. 19 is almost the same as the rotary connector device 1G according to the seventh embodiment shown in FIG. 16, except that the rotary member 10J is used in place of the rotary member 10G, whereas the fixed member 20J is used in place of the fixed member 20G, while the four flat cables 40 are used.

Thus, in the following sections, in the rotary connector devices 1H, 1I, and 1J according to the eighth to the tenth embodiments, some of the constituent elements that are the same as those in the rotary connector device 1A according to the first embodiment or the rotary connector device 1G according to the seventh embodiment will be referred to by using the same reference characters, and explanations of the structure and actions will be omitted or simplified.

### (Recessed part and projection part)

Although not shown, similarly to the rotary member 10A and the fixed member 20A of the rotary connector device 1A according to the first embodiment, as for the rotary members 10H, 10I, and 10J and the fixed members 20H, 20I, and 20J of the rotary connector devices 1H, 1I, and 1J, the recessed part 50 having a C-shape that extends along a circle centered on the rotation axis line 7 is formed on the sliding receiving surface 28N of the fixed member 20H, while the projection part 60 is provided on the sliding surface 18N of the rotary member 10H.

With this configuration, in the rotary connector devices 1H, 1I, and 1J of the present invention, when the rotary member 10 turns relative to the fixed member 20, the projection part 60 provided on the sliding surface 18N of the rotary member 10 moves within the recessed part 50 formed on the sliding receiving surface 28N of the fixed member 20. When the projection part 60 abuts against the stopper parts 52, 52, the rotatable range for the rotary member 10 to rotate relative to the fixed member 20 is regulated by the extending length of the recessed part 50 in which the projection part 60 is allowed to move.

Accordingly, in the rotary connector devices 1H, 1I, and 1J, the rotary member 10 is regulated so as to have a rotation angle smaller than 360° with respect to the fixed member 20. More specifically, in the rotary connector device 1H, the rotary member 10H is regulated so as to have a rotation angle smaller than 360° with respect to the fixed member 20H. Also, in the rotary connector device 1I, the rotary member 10I is regulated so as to have a rotation angle smaller than 360° with respect to the fixed member 20I. In addition, in the rotary connector device 1J, the rotary member 10J is regulated so as to have a rotation angle smaller than 360° with respect to the fixed member 20J.

### (Actions)

In the rotary connector devices 1H, 1I, and 1J, when the rotary member 10 turns relative to the fixed member 20, the projection part 60 provided on the sliding surface 18N of the rotary member 10 moves within the recessed part 50 formed on the sliding receiving surface 28N of the fixed member 20. When the projection part 60 abuts against the stopper parts 52, 52, the rotatable range for the rotary member 10 to rotate relative to the fixed member 20 is regulated by the extending length of the recessed part 50 in which the projection part 60 is allowed to move. Accordingly, in the rotary connector devices 1H, 1I, and 1J, the rotary member 10 is regulated so as to have a rotation angle smaller than 360° with respect to the fixed member 20. Further, the rotary connector devices 1H, 1I, and 1J are able to avoid the occurrence of excessive tightening and excessive loosening of the winding of the flat cables.

Because the actions of the rotary connector devices 1H, 1I, and 1J for avoiding the occurrence of the excessive tightening and the excessive loosening of the winding of the flat cables are the same as the actions of the rotary connector device 1G according to the seventh embodiment, explanations thereof will be omitted.

In the rotary connector devices 1H, 1I, and 1J, the center angle, which is the angle formed by the stopper parts 52, 52 of the recessed part 50 with respect to the center passed through by the rotation axis line 7, is smaller than 360°. With this configuration, the rotary connector devices 1H, 1I, and 1J make it possible to achieve the neutral positioning without fail, by simply placing the rotary member 10 in a neutral position by appearance.

In the rotary connector devices 1H, 1I, and 1J, because the recessed part 50 formed on the sliding receiving surface 28N of the fixed member 20 is a groove, unwanted substances do not easily intrude the accommodating space 70.

The shapes of the entire rotary connector devices 1H, 1I, and 1J are each a C-shape-attached circular columnar shape similar to the shapes of the fixed members 20H, 20I, and 20J. Thus, it is possible to make the rotary connector devices 1H, 1I, and 1J compact.

### (Advantageous effects)

The rotary connector devices 1H, 1I, and 1J make it possible to provide a rotary connector device that facilitates recognizing the neutral position of the rotary member with respect to the fixed member without using a neutral mechanism and that is capable of avoiding the occurrence of excessive tightening and excessive loosening of the winding of the flat cables.

The rotary connector devices 1H, 1I, and 1J make it possible to provide a rotary connector device in which unwanted substances do not easily intrude the accommodating space 70.

The rotary connector devices 1H, 1I, and 1J make it possible to provide a compact rotary connector device.

While being compact similarly to the rotary connector device 1G according to the seventh embodiment, the rotary connector devices 1H, 1I, and 1J make it possible to provide a rotary connector device capable of transmitting signals in a larger number of systems.

### <Modification example of Seventh to Tenth embodiments>

Regarding the rotary connector devices 1G to 1J according to the seventh to the tenth embodiments described above, the examples were explained in which the recessed part 50 and the projection part 60 are formed and provided similarly to the rotary member 10A and the fixed member 20A of the rotary connector device 1A according to the first embodiment.

However, the rotary connector device 1 of the present invention is not limited to the rotary connector devices 1G to 1J according to the seventh to the tenth embodiments, as long as the recessed part 50 is formed on one selected from between the sliding surface 18 and the sliding receiving surface 28, while the projection part 60 is provided on the other of the sliding surface 18 and the sliding receiving surface 28.

For example, in a rotary connector device 1 according to a modification example of the seventh to the tenth embodiments, at least one recessed part 50 and at least one projection part 60 may be formed and provided similarly to those in the rotary members 10 and the fixed members 20 in the rotary connector devices 1B to 1F according to the second to the sixth embodiments or the rotary connector devices 1 according to modification examples of the first to the sixth embodiment.

Because actions and advantageous effects of modification examples of the seventh to the tenth embodiments are represented by a sum of the actions and the advantageous effects of the seventh to the tenth embodiments, explanations thereof will be omitted.

### EXPLANATION OF REFERENCE NUMERALS

1, 1A, 1B, 1C, 1D, 1E, 1F, 1G, 1H, 1I: rotary connector device
7: rotation axis line
10, 10A, 10B, 10C, 10D, 10E, 10F, 10G, 10H, 10I: rotary member
12, 12A, 12B, 12C, 12D, 12E, 12F: ceiling plate part
13: lower face
14: inner circumferential cylinder part
15: bottom face
18, 18N, 18U: sliding surface
113: rotary member-side connector accommodating part
121: ceiling flat plate part
122: ceiling groove frame part
123: ceiling outer circumferential part
125: ceiling hanging part
20, 20A, 20B, 20C, 20D, 20E, 20F, 20G, 20H, 20I: fixed member
22: bottom plate part
23: outer circumferential cylinder part
25, 25B, 25C, 25E, 25F: annular supporting part
26: upper face
28, 28N, 28U: sliding receiving surface
213: fixed member-side connector accommodating part
251: annular support flat plate part
252: annular support groove frame part
253: annular support inner circumferential part
30: sleeve
40: flat cable
45: U=turn part
50: recessed part
52: stopper part
60: projection part
70: accommodating space

## Claims

1. A rotary connector device comprising:
a rotary member including a ceiling plate part and an inner circumferential cylinder part, the ceiling plate part having an annular shape, the inner circumferential cylinder part being formed at an inner circumferential edge of the ceiling plate part;
a fixed member including a bottom plate part and an outer circumferential cylinder part, the bottom plate part having an annular shape and being disposed to face and to be apart from the ceiling plate part of the rotary member, the outer circumferential cylinder part being formed at an outer circumferential edge of the bottom plate part; and
a flat cable accommodated in an accommodating space defined between the inner circumferential cylinder part of the rotary member and the outer circumferential cylinder part of the fixed member, wherein
the rotary member is assembled to be rotatable around a rotation axis line of the rotary member, relative to the fixed member,
the rotary member has a sliding surface that slides with respect to the fixed member,
the fixed member has a sliding receiving surface facing the sliding surface of the rotary member,
a recessed part having a C-shape that extends along an imaginary circle centered on the rotation axis line is formed on one of the sliding surface and the sliding receiving surface,
a projection part capable of moving within the recessed part is provided on an other of the sliding surface and the sliding receiving surface, and
a rotatable range for the rotary member to rotate relative to the fixed member is regulated by an extending length of the recessed part in which the projection part is allowed to move.

2. The rotary connector device according to claim 1, wherein
the recessed part is formed on the sliding receiving surface of the fixed member, and
the projection part is provided on the sliding surface of the rotary member.

3. The rotary connector device according to claim 1, wherein
the recessed part is formed on the sliding surface of the rotary member, and
the projection part is provided on the sliding receiving surface of the fixed member.

4. The rotary connector device according to claim 1, 2, or 3 wherein
the sliding surface is formed on a bottom face of the inner circumferential cylinder part that forms part of the rotary member, and
the sliding receiving surface is formed on an upper face of the bottom plate part that forms part of the fixed member.

5. The rotary connector device according to claim 1, 2, or 3, wherein
the fixed member further includes an annular supporting part that annularly extends inward from an inner face of an upper portion of the outer circumferential cylinder part and faces a lower face of an outer circumferential portion of the ceiling plate part of the rotary member,
the sliding surface is formed on the lower face of the outer circumferential portion of the ceiling plate part that forms part of the rotary member, and
the sliding receiving surface is formed on an upper face of the annular supporting part of the outer circumferential cylinder part that forms part of the fixed member.

6. The rotary connector device according to claim 1, 2, or 3, wherein the recessed part is either a groove or a slit.

7. The rotary connector device according to claim 1, 2, or 3, wherein the flat cable is connected to a steering wheel adapted for a steer-by-wire type.
